(19) Europäisches Patentamt / European Patent Office / Office européen des brevets

(11) **EP 3 226 458 B1**

(12) **EUROPEAN PATENT SPECIFICATION**

(45) Date of publication and mention
of the grant of the patent:
**02.09.2020   Bulletin 2020/36**

(21) Application number: **15874849.1**

(22) Date of filing: **30.07.2015**

(51) Int Cl.:
$H04L\ 5/00^{(2006.01)}$          $H04L\ 1/00^{(2006.01)}$

(86) International application number:
**PCT/CN2015/085554**

(87) International publication number:
**WO 2016/107160 (07.07.2016 Gazette 2016/27)**

(54) **DATA PACKET PROCESSING METHOD AND APPARATUS IN AN OFDMA SYSTEM, AND STORAGE MEDIUM**

DATENPAKETVERARBEITUNGSVERFAHREN UND -VORRICHTUNG IN EINEM OFDMA-SYSTEM UND SPEICHERMEDIUM

PROCÉDÉ ET APPAREIL DE TRAITEMENT DE PAQUET DE DONNÉES DANS UN SYSTÈME OFDMA, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2014   CN 201410854764**

(43) Date of publication of application:
**04.10.2017   Bulletin 2017/40**

(73) Proprietor: **ZTE Corporation
Shenzhen, Guangdong 518057 (CN)**

(72) Inventors:
• **LI, Liguang
  Shenzhen
  Guangdong 518057 (CN)**
• **XU, Jun
  Shenzhen
  Guangdong 518057 (CN)**
• **XU, Jin
  Shenzhen
  Guangdong 518057 (CN)**

(74) Representative: **Aipex B.V.
P.O. Box 30223
3001 DE Rotterdam (NL)**

(56) References cited:
EP-A1- 2 472 726          WO-A2-2011/108904
CN-A- 101 636 938          CN-A- 104 168 097
US-A1- 2014 064 256

• **"3rd Generation Partnership Project; Technical Specification Group Radio Access Network; Evolved Universal Terrestrial Radio Access (E-UTRA); Physical channels and modulation (Release 11)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.6.0, 23 September 2014 (2014-09-23), pages 1-120, XP050925877, [retrieved on 2014-09-23]**

**Description**

Technical Field

The present invention relates to a data packet transmission technology in an Orthogonal Frequency Division Multiple Access (OFDMA) system, in particular to a data packet processing method and apparatus in an OFDMA system, and a storage medium.

Background

The OFDMA technology is one of key technologies in a fourth generation mobile communication Long Term Evolution (LTE) system and can combine with a space-time coding technology, inter-symbol interference and inter-channel interference suppression technologies and a smart antenna technology to improve system performance to an utmost extent and improve communication throughput. In the fourth generation mobile communication LTE system, a multicarrier OFDMA technology is used in downlink communication, and a Single-Carrier Frequency Division Multiple Access (SC-FDMA) technology is used in uplink communication.

All subcarriers in OFDMA are orthogonal to each other, each subcarrier has an integral number of carrier periods in time of one symbol, a spectrum null of each carrier is overlapped with a spectrum null of an adjacent carrier, and thereby there is no interference between subcarriers. In addition, since carriers are partially overlapped, the spectrum utilization rate is greatly improved. Cyclic prefixes are filled into OFDMA symbol guard intervals to guarantee that the number of waveform periods contained in a delay copy of OFDMA symbols in a Fast Fourier Transform (FFT) period is also an integer. Thereby, signals whose delays are smaller than guard intervals would not produce Inter-symbol interference (ISI) and Inter-channel interference (ICI) in a demodulation process. In addition, a main advantage of the OFDMA system is that orthogonal subcarriers can realize modulation and demodulation by using Fast Fourier Transform (FFT/IFFT), thereby computation complexity can be obviously decreased and hardware realization is simple.

In a digital communication system, generally channel error correction coding needs to be performed on information data to improve reliability of data in a channel transmission process. Channel error correction coding which is more frequently used currently includes Turbo coding, LDPC coding, convolutional coding, RS coding, BCH coding, etc. Herein a binary Turbo code in an LTE system is a parallel concatenated code having an internal interleaver and generally is formed by two Recursive Systematic Convolutional (RSC) component code coders which have the same structure and are concatenated in parallel. The interleaver in the Turbo code performs random permutation on bit positions in an input binary information sequence before a second component code coder. When the interleaver is sufficiently large, the Turbo code has a characteristic similar to a random long code.

A Low Density Parity Check Code (LDPC) is a linear block code based on a sparse check matrix, and low-complexity coding and decoding can be realized by using sparsity of a check matrix thereof. Since LDPC codes are simple to decode and a throughput is comparatively high, they are used in microwave communication or local area network communication.

A convolutional code is also a comparatively common forward error correction code. A feature of the convolutional code is that, when coding is performed on input information at a certain moment, it is not only related to an input at a current moment, but also is related to inputs at multiple moments before the current moment, i.e., generation of a code word totally is restricted by information at multiple input moments. An RS code is a special non-binary Broadcast Channel (BCH) code having a very strong error correction capability, RS coding is a shortest distance maximization coding method, and decoding methods for RS coding and BCH coding generally uses hard decision decoding.

In a channel error correction coded block, generally a CRC sequence is used to perform error detection, CRC is an abbreviation of Cyclic Redundancy Check and generally is redundant information added to an information block before error correction coding. A CRC working method involves steps that redundant information is generated at a sending end, the redundant information is added behind an information bit and is jointly sent to a receiving end, and after the receiving end receives the information, whether the information block is correct is checked according to the same algorithm.

In a digital communication system, generally a source information block is comparatively large and needs to be segmented into smaller information blocks through code block segmentation, and then channel coding is performed on these smaller information blocks. Reasons for doing this are that, if a code length is long, a decoder for an error correction code would be very complex, delay would be comparatively great, and it is quite difficult to design an error correction code with a code length which changes in a large range because generally a length of a source information block changes and is not fixed. For an error correction code, the longer the code length is, the better the performance is, but the higher the complexity is. In addition, in an existing OFDMA system, the length of some error correction codes is comparatively great. For example, in an LTE system, the length may reach 6144 bits. As a result, a problem of comparatively great decoding delay of error correction codes is caused and the complexity is comparatively high.

In addition, an OFDMA system is very sensitive to phase noise and carrier frequency offset, this is a disadvantage of OFDMA technology. The entire OFDMA system has a particularly strict requirement on orthogonality between subcarriers, and any small carrier frequency offset would destroy orthogonality between subcarriers and cause ICI, and phase noise would also cause rotation and diffusion of code element constellation points to produce ICI. These influences would all decrease system communication reliability. Moreover, when an OFDMA communication system is under a fading channel, channels of different error correction code blocks in one OFDM symbol are caused to be different, and packet error performance of a final data packet would be caused to be decreased. Therefore, a processing method is urgently needed to improve data transmission reliability and system communication robustness and decrease decoding delay of an OFDMA system under a fading channel.

It is a pity that there is no related technology for reference currently.

Summary

In order to solve the above-mentioned problem, embodiments of the present invention provide a data packet processing method and apparatus in an OFDMA system, and a storage medium.

The solution to the problem is provided by the independent claims. The preferred embodiments are defined by the dependent claims. Non-claimed embodiments are given for explanatory purposes.

In the technical solution of the embodiment of the present invention, OFDMA and data packet coding technologies are combined to perform data transmission, so that the receiving end can adopt a streamline-like mode to perform demodulation decoding, the decoding speed is faster and the receiving robustness is stronger. Once an OFDM symbol is received, all error correction code blocks of a previous OFDM symbol are firstly decoded at an interval of receiving a next OFDMA symbol, thereby the decoding delay is shortened, the speed is comparatively fast and throughput is large. Besides, since data packet coding is combined, all error correction code blocks would additionally have some check data blocks by means of a packet coding method. At the sending end, these check data blocks are sent after original error correction code data blocks, thus, when the receiving end performs decoding, the original error correction code blocks can be firstly decoded and whether they are correct is judged. If all are correct, the check data blocks do not need to be decoded any longer, thereby the decoding operation is reduced, the energy consumption is reduced and the decoding speed is improved. Moreover, if the original error correction code blocks are erroneously decoded, all error correction code blocks can be decoded again through packet decoding, the performance of each error correction code block can be improved and thereby the receiving robustness is improved.

Brief Description of Drawings

FIG. 1 illustrates a schematic diagram of access of an OFDMA system according to an embodiment of the present invention.

FIG. 2 illustrates a schematic diagram of frequency dimension and time dimension in an OFDMA system according to an embodiment of the present invention.

FIG. 3 illustrates a flowchart of a data packet processing method in an OFDMA system according to embodiment one of the present invention.

FIG. 4 illustrates a structural schematic diagram of components of a data packet processing apparatus in an OFDMA system according to embodiment two of the present invention.

FIG. 5 illustrates a schematic diagram of resource allocation of an OFDMA system according to example one in embodiment one/embodiment two of the present invention.

FIG. 6 illustrates a schematic diagram of resource allocation of an OFDMA system according to example five in embodiment one/embodiment two of the present invention.

FIG. 7 illustrates a schematic diagram of resource allocation of an OFDMA system according to example five in embodiment one/embodiment two of the present invention.

FIG. 8 illustrates a schematic diagram of data subjected to constellation mapping modulation according to example six in embodiment one/embodiment two of the present invention.

FIG. 9 illustrates a schematic diagram of two-dimensional time-frequency resource allocation of an OFDMA system according to example six in embodiment one/embodiment two of the present invention.

FIG. 10 illustrates a schematic diagram of two-dimensional time-frequency resource allocation of an OFDMA system according to example eight in embodiment one/embodiment two of the present invention.

FIG. 11 illustrates a flowchart of receiving and decoding of an OFDMA system according to example nine in embodiment one of the present invention.

FIG. 12 illustrates a flowchart of a data packet processing method in an OFDMA system according to embodiment three of the present invention.

FIG. 13 illustrates a structural schematic diagram of components of receiving and decoding modules of an OFDMA system according to example nine in apparatus embodiment two of the present invention.

Detailed Description

In order to make the purpose, technical solution and advantages of the present invention clearer, the present invention will be further described below in detail in combination with the embodiments and with reference to the drawings.

It needs to be stated that embodiments of the present invention and all features in the embodiments may be mutually combined within the protection scope of the present invention under a situation of no conflict. Besides, although logical sequences are illustrated in the flowcharts, the illustrated or described steps may be executed according to sequences different from the sequences here under certain circumstances.

Embodiment one

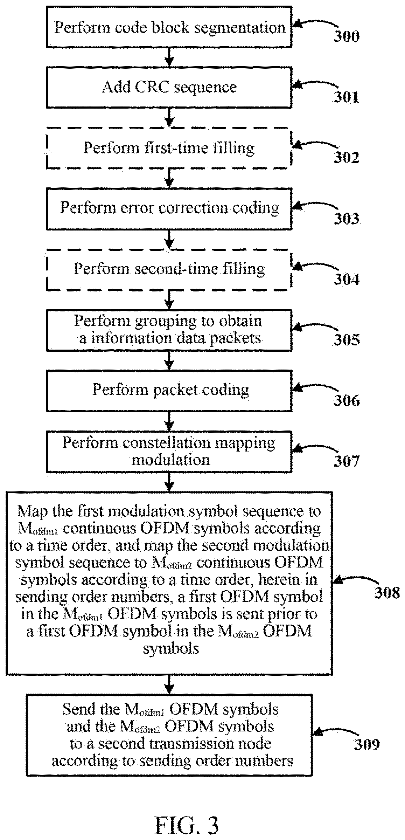

FIG. 3 illustrates a flowchart of a data packet processing method in an OFDMA system according to embodiment one of the present invention. As illustrated in FIG. 3, the data packet processing method in the OFDMA system according to the embodiment of the present invention includes steps300-309.

In step 300, code block segmentation is performed on a source data packet to be transmitted to obtain d data blocks.

In step 301, a CRC sequence is respectively added to each data block of the d data blocks.

In step 303, error correction coding is respectively performed on the d data blocks added with the CRC sequence.

In step 305, grouping is performed to obtain $a$ information data packets with a same length.

In step 306, packet coding is performed on the $a$ information data packets to obtain b check data packets.

In step 307, constellation mapping modulation is performed on the $a$ information data packets to obtain a first modulation symbol sequence with a length of k1 and constellation mapping modulation is performed on the b check data packets to obtain a second modulation symbol sequence with a length of k2; or constellation mapping modulation is performed on the $a$ information data packets and the b check data packets, herein modulation symbols including the $a$ information data packets form a first modulation symbol sequence, a length of the first modulation symbol is k1, and modulation symbols including the b check data packets form a second modulation symbol sequence, and a length of the second modulation symbol sequence is k2.

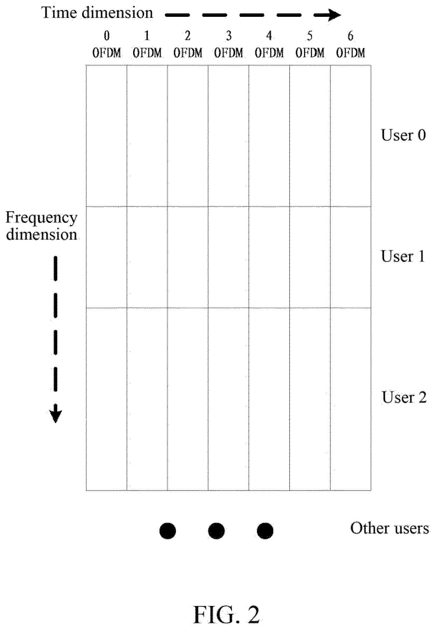

In step 308, the first modulation symbol sequence is mapped to $M_{ofdm1}$ continuous OFDM symbols according to a time order, and the second modulation symbol sequence is mapped to $M_{ofdm2}$ continuous OFDM symbols according to a time order, herein in sending order numbers, a first OFDM symbol in the $M_{ofdm1}$ OFDM symbols is sent prior to a first OFDM symbol in the $M_{ofdm2}$ OFDM symbols. As illustrated in FIG. 2, it illustrates a resource occupation situation according to this embodiment of the present invention.

In step 309, the $M_{ofdm1}$ OFDM symbols and the $M_{ofdm2}$ OFDM symbols are sent to a second transmission node according to sending order numbers.

Herein, $a$ is an integer greater than or equal to 2, d is an integer greater than or equal to 2, b is an integer greater than or equal to 1, k1 and k2 are both integers greater than or equal to 1, and $M_{ofdm1}$ and $M_{ofdm2}$ are both integers greater than or equal to 1.

As one implementation mode, in the sending order numbers, a first OFDM symbol in the $M_{ofdm2}$ OFDM symbols is a last OFMA symbol in the $M_{ofdm1}$ OFDM symbols or an xth OFDM symbol after the last OFMA symbol in the $M_{ofdm1}$ OFDM symbols, herein x is greater than or equal to 1.

As one implementation mode, after the CRC sequence is added and before error correction coding is performed, first-time filling is firstly performed, the first-time filling is to fill mli bits to an ith data block, herein mli is an integer greater than or equal to 0, i=0, 1,..., d-1, and d is an integer greater than or equal to 2.

As one implementation mode, after error correction decoding is performed and before grouping is performed to obtain the *a* information data packets with a same length, second-time filling is performed, the second-time filling is to add m2 bits to a head or tail of an entire error correction code data block, herein the entire error correction code data block includes d error correction code blocks, d is an integer greater than or equal to 2 and m2 is an integer greater than or equal to 0.

As one implementation mode, for the *a* information packets with a same length which are obtained through grouping, the number of bits of each information data packet is k×c, herein *a* is an integer greater than or equal to 2, k is the number of bits of an error correction code block, k is an integer greater than or equal to 1 and c is an integer greater than or equal to 1.

As one implementation mode, in the step that the CRC sequence is respectively added to each data block, a length of each CRC sequence is h bits, herein h is an integer greater than or equal to 1.

As one implementation mode, in the step that constellation mapping modulation is performed on the *a* information data packets to obtain the first modulation symbol sequence with the length of kl, all bits on which constellation mapping modulation is performed do not include the bit data of the first-time filling and the second-time filling, herein *a* is an integer greater than or equal to 2 and k1 is an integer greater than or equal to 1.

As one implementation mode, in the step of performing code block segmentation on a source data packet to be transmitted to obtain d data blocks, a length of each data block depends on the following parameters: a length of the source data packet, the number of subcarriers on each OFDM symbol allocated by system and used for transmitting data from first transmission node to second transmission node, a modulation order, an error correction code rate, the number of OFDM symbols, the number of error correction code blocks in information data packet, the number of error correction code blocks born on each OFDM symbol, the number of bits of CRC sequence and the number of check data packets obtained through packet coding, herein the modulation order is the number of bits carried by a constellation mapping modulation symbol, and d is an integer greater than or equal to 1.

As one implementation mode, a modulation order of the first modulation symbol sequence is Mod1' and a modulation order of the second modulation symbol sequence is Mod2', herein Mod1' and Mod2' are integers from 1 to 16; or the first modulation symbol sequence includes q1 modulation symbol subsequences, a modulation order in the subsequences is the same, Modi is a modulation order used by an ith modulation symbol subsequence in the first modulation symbol sequence, and Modi is an integer from 1 to 16, i=0, 1,..., (q1-1). The second modulation symbol sequence includes q2 modulation symbol subsequences, a modulation order in the subsequences is the same, Modj is a modulation order used by a jth modulation symbol subsequence in the second modulation symbol sequence, and Modj is an integer from 1 to 16, and j=0, 1,..., (q2-1), herein the modulation order is the number of bits carried by a constellation mapping modulation symbol, and q1 and q2 are both integers greater than or equal to 1.

A table of relations among the number of bits carried by constellation mapping modulation symbol, the modulation order and the modulation mode is shown in Table 1:

Table 1

| Number of carried bits | Modulation order | Modulation mode | Number of carried bits | Modulation order | Modulation mode |
|---|---|---|---|---|---|
| 1 | 1 | BPSK | 9 | 9 | 512QAM |
| 2 | 2 | QPSK (4QAM) | 10 | 10 | 1024QAM |
| 3 | 3 | 8PSK (8QAM) | 11 | 11 | 2048QAM |
| 4 | 4 | 16QAM | 12 | 12 | 4096QAM |
| 5 | 5 | 32QAM | 13 | 13 | 8192QAM |
| 6 | 6 | 64QAM | | | |
| 7 | 7 | 128QAM | | | |
| 8 | 8 | 256QAM | | | |

As one implementation mode, in the step of performing packet coding on the *a* information data packets to obtain b check data packets includes: using ith bits in all *a* information data packets to form a sequence Si with a length of *a* bits, and performing single parity check coding, b-multiple bit parity check coding, Hamming coding or RS coding on Si to obtain a check sequence Ti with a length of b bits; and sequentially combining jth bits of all check sequences Ti to obtain a check data packet Pj with a length of n bits.

The above-mentioned single parity check coding refers to that: all input *a* bits are considered as a sequence Si, and binary exclusive or (XOR) addition is performed on Si to obtain one check bit.

The above-mentioned b-multiple bit parity check coding refers to that: all input *a* bits are considered as a sequence Si and binary XOR addition is performed on a subset Set1 of the set Si to obtain a first check bit; binary XOR addition is performed on a subset Set2 of a new set formed by the set S and the first check bit to obtain a second check bit; binary XOR addition is performed on a subset Set3 of a new set formed by the set S, the first check bit and the second check bit to obtain a third check bit; and so on, binary XOR addition is performed on a subset Setb of a new set formed by the set S and the first b-1 check bits to obtain a bth check bit.

Herein, i=0, 1,..., *n*-1, n is a length of an error correction code block set, n is an integer greater than 1, j=0, 1,..., b-1, b is an integer greater than or equal to 1 and *a* is an integer greater than or equal to 2.

As one implementation mode, the step of mapping the first modulation symbol sequence to $M_{ofdm1}$ continuous OFDM symbols according to a time order includes: mapping the first modulation symbol sequence to $Nsc1 \times M_{ofdm1}$ two-dimensional time-frequency resource according to an order of frequency first and then time, herein frequency dimension is used for identifying index numbers of subcarriers in OFDM symbols, time dimension is used for identifying index numbers of OFDM symbols, the $Nsc1 \times M_{ofdm1}$ two-dimensional time-frequency resource is $M_{ofdm1}$ continuous OFDM symbols in time dimension, which are allocated by a system and are used for transmitting data from a first transmission node to a second transmission node, and Nscl continuous non-reference signal subcarriers in frequency dimension of each OFDM symbol, Nscl is an integer greater than or equal to 1 and $M_{ofdm1}$ is an integer greater than or equal to 1.

As one implementation mode, in the step of mapping the first modulation symbol sequence to $Nsc1 \times M_{ofdm1}$ two-dimensional time-frequency resource according to an order of frequency first and then time, a method for mapping to Nscl continuous non-reference signal subcarriers of an ith OFDM symbol includes one of the following modes:

> Mode 1: firstly interleaving Nscl constellation mapping modulation symbols mapped to an ith OFDM symbol, and then sequentially mapping the constellation mapping modulation symbols to Nscl non-reference signal subcarriers of the ith OFDM symbol, or mapping Nscl constellation mapping modulation symbols mapped to an ith OFDM symbol to Nscl non-reference signal subcarriers of the ith OFDM symbol according to a random mapping relation table, or firstly sequentially mapping Nscl constellation mapping modulation symbols mapped to an ith OFDM symbol to a logical buffer memory, and then mapping data in the logical buffer memory to Nscl non-reference signal subcarriers of the ith OFDM symbol according to a random mapping relation table; and

> Mode 2: sequentially mapping Nscl constellation mapping modulation symbols mapped to an ith OFDM symbol to Nscl non-reference signal subcarriers of the ith OFDM symbol;
> herein i=0, 1,..., $M_{ofdm1}$-1, Nscl is an integer greater than or equal to 1 and $M_{ofdm1}$ is an integer greater than or equal to 1.

As one implementation mode, if d is greater than $M_{ofdm1}$, the implementation is performed according to mode 1; otherwise, the implementation is performed according to mode 2; herein d is the number of error correction code blocks, d is an integer greater than or equal to 2, and $M_{ofdm1}$ is an integer greater than or equal to 1.

As one implementation mode, the step that of mapping second modulation symbol sequence to $M_{ofdm2}$ continuous OFDM symbols according to a time order includes: mapping the second modulation symbol sequence to $Nsc2 \times M_{ofdm2}$ two-dimensional time-frequency resource according to an order of frequency first and then time, herein frequency dimension is used for identifying index numbers of subcarriers in OFDM symbols, time dimension is used for identifying index numbers of OFDM symbols, the $Nsc2 \times M_{ofdm2}$ two-dimensional time-frequency resource is $M_{ofdm2}$ continuous OFDM symbols in time dimension, which are allocated by a system and are used for transmitting data from a first transmission node to a second transmission node, and Nsc2 continuous non-reference signal subcarriers in frequency dimension of each OFDM symbol, Nsc2 is an integer greater than or equal to 1 and $M_{ofdm2}$ is an integer greater than or equal to 1.

As one implementation mode, in the step of mapping the second modulation symbol sequence to $Nsc2 \times M_{ofdm2}$ two-dimensional time-frequency resource according to an order of frequency first and then time, a method for mapping to Nsc2 continuous non-reference signal subcarriers of an ith OFDM symbol includes one of the following modes:

> mode 1: firstly interleaving Nsc2 constellation mapping modulation symbols mapped to an ith OFDM symbol and then sequentially mapping the constellation mapping modulation symbols to Nsc2 non-reference signal subcarriers of the ith OFDM symbol, or mapping Nsc2 constellation mapping modulation symbols mapped to an ith OFDM symbol to Nsc2 non-reference signal subcarriers of the ith OFDM symbol according to a random mapping relation table, or firstly sequentially mapping Nsc2 constellation mapping modulation symbols mapped to an ith OFDM symbol to a logical buffer memory, and then mapping data in the logical buffer memory to Nsc2 non-reference signal subcarriers of the ith OFDM symbol according to a random mapping relation table; and

mode 2: sequentially mapping the Nsc2 constellation mapping modulation symbols mapped to an ith OFDM symbol to Nsc2 non-reference signal subcarriers of the ith OFDM symbol;

herein i=0, 1,..., $M_{ofdm2}$-1, Nsc2 is an integer greater than or equal to 1 and $M_{ofdm2}$ is an integer greater than or equal to 1.

As one implementation mode, if (b×c) is greater than $M_{ofdm2}$, the implementation is performed according to mode 1; otherwise, the implementation is performed according to mode 2, herein b is the number of check data packets, b is an integer greater than or equal to 1, c is the number of error correction code blocks included in each information data packet, c is an integer greater than or equal to 1, and $M_{ofdm2}$ is an integer greater than or equal to 1.

As one implementation mode, in the process of mapping the first modulation symbol sequence and the second modulation symbol sequence to OFDM symbols, a process for mapping to Nsc continuous non-reference signal subcarriers of an ith OFDM symbol includes one of the following modes:

mode 1: firstly interleaving Nsc constellation mapping modulation symbols mapped to an ith OFDM symbol and then sequentially mapping the constellation mapping modulation symbols to Nsc non-reference signal subcarriers of the ith OFDM symbol, or mapping Nsc constellation mapping modulation symbols mapped to an ith OFDM symbol to Nsc non-reference signal subcarriers of the ith OFDM symbol according to a random mapping relation table, or firstly sequentially mapping Nsc constellation mapping modulation symbols mapped to an ith OFDM symbol to a logical buffer memory, and then mapping data in the logical buffer memory to Nsc non-reference signal subcarriers of the ith OFDM symbol according to a random mapping relation table; and

mode 2: sequentially mapping Nsc constellation mapping modulation symbols mapped to an ith OFDM symbol to Nsc non-reference signal subcarriers of the ith OFDM symbol;

herein Nsc is the number of non-reference signal subcarriers in an ith OFDM symbol allocated by a system and used for transmitting data from a first transmission node to a second transmission node, Nsc is an integer greater than or equal to 1, i=0, 1,..., $M_{ofdm}$-1, $M_{ofdm}$ is the number of all OFDM symbols to which the first modulation symbol sequence and the second modulation symbol sequence are mapped, and $M_{ofdm}$ is an integer greater than 0.

As one implementation mode, if (d+b×c) is greater than $M_{ofdm}$, the implementation is performed according to mode 1; otherwise, the implementation is performed according to mode 2, herein d is the number of error correction code blocks, d is an integer greater than or equal to 2, b is the number of check data packets, b is an integer greater than or equal to 1, c is the number of error correction code blocks contained in each information data packet, c is an integer greater than or equal to 1, $M_{ofdm}$ is the number of all OFDM symbols to which the first modulation symbol sequence and the second modulation symbol sequence are mapped, and $M_{ofdm}$ is an integer greater than 0.

As one implementation mode, the interleaving method is row-row and col-column block interleaving of row-input column-output or random interleaving, and the random mapping relation table is an input-output relation table obtained through row-row and col-column block interleaving of row-input column-output or a random input-output relation table, in which row and col are both integers greater than 0.

As an implementation mode, a bit length of each error correction code block in the information data packet is e, e=m×Nsc1×g, herein m is the number of bits carried by each constellation mapping modulation symbol, m is an integer greater than or equal to 1, Nscl is the number of non-reference signal subcarriers in an ith OFDM symbol configured by a system and used for transmitting data from a first transmission node to a second transmission node, i=0, 1,..., $M_{ofdm1}$-1, Nscl is an integer greater than or equal to 1, a specific numerical value of g is 1, 2, 3, 4, 6 or 7, and $M_{ofdm1}$ is the number of OFDM symbols to which the first modulation symbol sequence is mapped, $M_{ofdm1}$ is an integer greater than 0.

In an embodiment of the present invention, at a receiving end, a data packet is received according to the following mode:

receiving OFDM symbols;

demodulating the OFDM symbols, and obtaining Nsc constellation mapping modulation symbols born on an ith OFDM symbol according to a configuration situation of subcarrier resource configured by a system and used for transmitting data from a first transmission node to a second transmission node;

demodulating constellation mapping, i.e., demodulating the Nsc constellation mapping modulation symbols into soft bit information;

performing error correction decoding, i.e., performing error correction decoding on the demodulated soft bit information;

removing CRC sequences, i.e., removing CRC sequences in all error correction code blocks;

merging data, i.e., merging all data obtained after the CRC sequences are removed to obtain the source data packet sent by the first transmission node;

herein i=0, 1,..., $M_{ofdm}$-1, $M_{ofdm}$ is the number of all OFDM symbols, $M_{ofdm}$ is an integer greater than 1 and Nsc is an integer greater than or equal to 1.

As one implementation mode, the error correction decoding mode at least includes that:

since bxc data blocks in check data packets also belong to an error correction code word space and can also be decoded, thus the number of error correction code blocks is d+bxc; after all error correction code blocks are decoded, whether a code word is erroneous is judged according to a CRC sequence and/or error correction code word space, if it is erroneous, soft bit information of an erroneous error correction code block is saved, and if it is correct, a cumulative XOR result of all error correction code blocks which are correctly decoded is calculated; according to a judgment condition that whether first d error correction code blocks are correctly decoded or all d+b×c error correction code blocks are correctly decoded, if the judgment condition is satisfied, the process is exited; if the judgment condition is not satisfied, through a packet decoding method, soft bit information of each erroneous error correction code word is demodulated out by using soft bit information of erroneous error correction code blocks, a cumulative XOR result of correct error correction code words and an XOR relation among all code blocks in packet coding, the erroneous error correction code blocks are decoded, and then according to the judgment condition that whether first d error correction code blocks are correctly decoded or all d+b×c error correction code blocks are correctly decoded, if the judgment condition is satisfied, the process is exited; and if the judgment condition is not satisfied, the process is exited or iteration is continuously performed to perform packet decoding, herein the maximum number of iterations is MAX;

herein d is the number of error correction code blocks, d is an integer greater than or equal to 2, b is the number of check data packets, b is an integer greater than or equal to 1, c is the number of error correction code blocks included in each information data packet, c is an integer greater than or equal to 1 and MAX is an integer greater than 1.

The soft bit information of each erroneous error correction code word is demodulated out by using soft bit information of erroneous error correction code blocks, a cumulative XOR result of correct error correction code words and an XOR relation among all code blocks in packet coding, a specific expression for calculating soft bit information $LLR'_{err(i,j)}$ of a jth bit of an ith erroneous error correction code block is as follow:

$$LLR'_{err(i,j)} = LLR_{err(i,j)} + k0 \times sign_{err(i,j)} \times MS_{err(i,j)} \times C_{crt(j)}$$

herein parameter $LLR_{err(i,j)}$ is saved soft bit information of a jth bit of an ith erroneous error correction code block, parameter k0 is a real number greater than 0, $sign_{err(i,j)}$ is sign-bit cumulative result of soft bit information of jth bits of all other erroneous error correction code blocks except the ith erroneous error correction code block, $MS_{err(i,j)}$ is an amplitude result provided by soft bit information of jth bits of all other erroneous error correction code blocks (here a minimum algorithm is used), $C_{crt(j)}$ is a sign-bit cumulative result of soft bit information of jth bits of all correct error correction code blocks, and specific expressions are as follows:

$$sign_{err(i,j)} = sign(LLR_{err(0,j)}) \times \cdots \times sign(LLR_{err(i-1,j)}) \times sign(LLR_{err(i+1,j)}) \times \cdots \times sign(LLR_{err(enum,j)})$$

$$MS_{err(i,j)} = \min\left(abs(LLR_{err(0,j)}), \cdots, abs(LLR_{err(i-1,j)}), abs(LLR_{err(i+1,j)}), \cdots, abs(LLR_{err(enum,j)})\right)$$

$$C_{crt(j)} = sign(LLR_{crt(0,j)}) \times sign(LLR_{crt(1,j)}) \times \cdots \times sign(LLR_{crt(cnum,j)})$$ .

As one implementation mode, Turbo coding, convolutional coding, LDPC coding, RS coding, Hamming coding, product coding or BCH coding is used as an error correction coding method of the error correction code blocks.

The essence of the technical solution of the present invention will be further described below through specific examples.

Example one

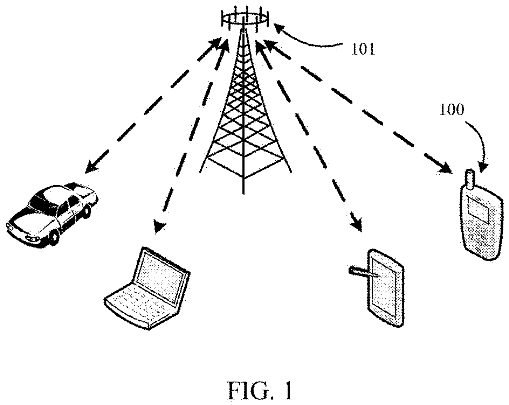

In an OFDMA communication system, a single OFDM symbol has 1024 subcarriers, and the number of effective data subcarriers is 800. The present example is used for transmitting data from a first transmission node which is a mobile user 100 to a second transmission node which is a base station 101, as illustrated in FIG. 1. A data packet processing method in an OFDMA system according to the embodiment of the present invention at least includes the following steps 301-309, as illustrated in FIG. 3.

In step 300, code block segmentation is performed on a source data packet to be transmitted with a length of 1968 bits to obtain d=6 data blocks, herein a length of each data block is 328 bits.

In step 301, a CRC sequence with a length of h=8 bits is respectively added to each data block, a length of each data block added with the CRC sequence becomes 336 bits, and since the length of each data block is the same and is equal to mother code input bits which are 336 bits, first-time filling is not needed.

In step 303, Turbo error correction coding is respectively performed on d=6 data blocks added with the CRC sequence, a code length of Turbo error correction coding is 672 and a code rate is 1/2.

In step 305, grouping is performed to obtain $a$=6 information data packets with a same length, herein each information data packet has $1\times672$ bits, each information data packet has 1 Turbo error correction code block, and since 6 information data packets are exactly obtained through grouping and each information data packet has 1 Turbo error correction code data block, second-time filling is not needed.

In step 306, packet coding is performed on $a$=6 information data packets to obtain b=1 check data packet, herein a length of the check data packet is 672 bits, and a single parity check coding method is used in the packet coding.

In step 307, a constellation mapping modulation mode is QPSK and a modulation order is 2, constellation mapping modulation is performed on the $a$=6 information data packets to obtain a first modulation symbol sequence with a length of k1=2016 and constellation mapping modulation is performed on the b=1 check data packet to obtain a second modulation symbol sequence with a length of k2=336; or constellation mapping modulation is performed on the $a$=6 information data packets and the b=1 check data packet, herein modulation symbols including the $a$=6 information data packets form a first modulation symbol sequence with a length of k1=2016, and other modulation symbols form a second modulation symbol sequence with a length of k2.

In step 308, the first modulation symbol sequence is mapped to $M_{ofdm1}$=6 continuous OFDM symbols according to a time order, including that: the first modulation symbol sequence is mapped to (Nsc1=336)$\times$($M_{ofdm1}$=6) two-dimensional time-frequency resource according to an order of frequency first and then time, herein Nsc1=336 constellation mapping modulation symbols mapped to an ith OFDM symbol are sequentially mapped to Nsc1=336 non-reference signal subcarriers of the ith OFDM symbol, i=0, 1,..., 5; and the second modulation symbol sequence is mapped to $M_{ofdm2}$=1 continuous OFDM symbol according to a time order, including that: the second modulation symbol sequence is mapped to (Nsc2=336)$\times$($M_{ofdm2}$=1) two-dimensional time-frequency resource according to an order of frequency first and then time, herein Nsc1=336 constellation mapping modulation symbols mapped to an ith OFDM symbol are sequentially mapped to Nsc1=336 non-reference signal subcarriers of the ith OFDM symbol, i=6, i is a sending order number and an OFDM symbol with a smaller sending order number is sent more early.

In step 309, the mobile user 100 sends the $M_{ofdm1}$=6 OFDM symbols and the $M_{ofdm2}$=1 OFDM symbols to the base station 101 according to sending order numbers.

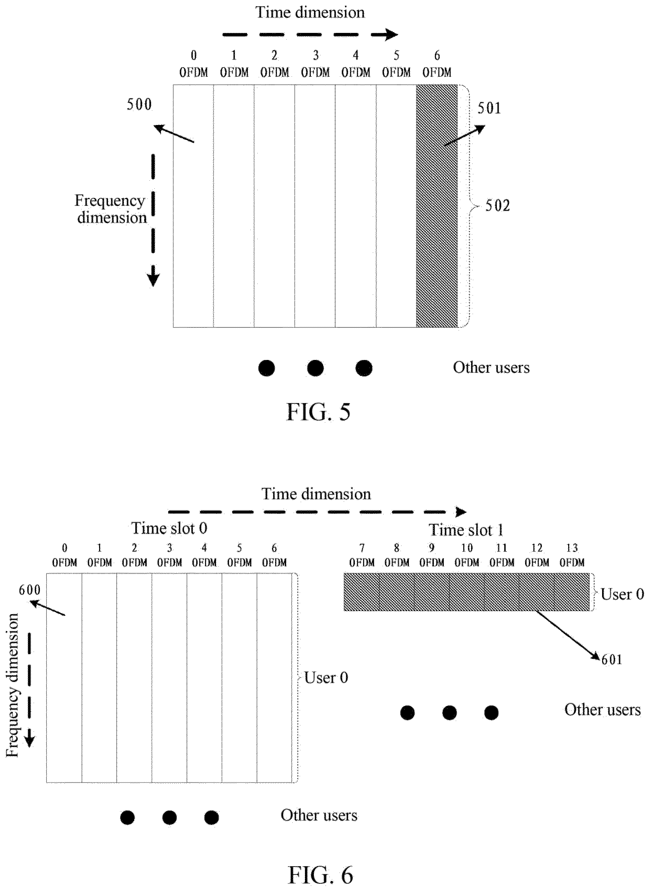

Sending order numbers of all OFDM symbols and the mapping situation of two-dimensional time-frequency resource are as specifically illustrated in FIG. 5, the number of subcarriers configured by a system for the mobile user 100 transmitting data to the base station 101 is 336, data of the mobile user 502 are born on 7 OFDMA symbols, the first modulation symbol sequence 500 is born on the 0th to 5th OFDM symbols and the second modulation symbol sequence 501 is born on the 6th OFDM symbol.

Example two

Differences of example two from example one lie in that each information data packet obtained through grouping in step 305 has $2\times672$ bits and a modulation mode used for the second modulation symbol sequence in step 307 is 16QAM, as described as follows.

In step 305, grouping is performed on data obtained after Turbo error correction coding is performed to obtain $a$=3 information data packets with a same length, herein each information data packet has $2\times672$ bits, each information data packet has 2 Turbo error correction code blocks; and in step 306, a length of 1 check data packet obtained through packet coding is also $2\times672$ bits.

In step 307, a length of the first modulation symbol sequence is k1=2016 constellation mapping modulation symbols, a modulation order is Mod1'=2, a constellation mapping modulation mode is QPSK, a length of the first modulation symbol sequence is k2=336 constellation mapping modulation symbols, a modulation order is Mod2'=4 and a constellation mapping modulation mode is 16QAM; or the first modulation symbol sequence includes q1=2 modulation symbol subsequences, modulation orders in the subsequences are the same, a length of a 0th modulation symbol subsequence is 1344, a modulation mode used is BPSK, a modulation order is 1, a length of a 1st modulation symbol subsequence is 672, a modulation mode used is 16QAM, a modulation order is 4, the second modulation symbol sequence includes q2=2 modulation symbol subsequence, a length of a 0th modulation symbol subsequence is 168, a modulation mode used is QPSK, a modulation order is 2, a length of a 1st modulation symbol subsequence is 168, a modulation mode used is 64QAM and a modulation order is 6.

Example three

Differences of example three from example one lie in that the packet coding method in step 306 is a dual parity check coding method and a modulation mode used for the second modulation symbol sequence in step 307 is 16QAM, as described as follows.

In step 306, packet coding is performed on $a$=6 information data packets to obtain b=2 check data packets, a length of the check data packet is 672 bits and the packet coding uses a dual parity check coding method as follow: the 0th check data packet P0 selects all 6 Turbo error correction code blocks to perform single parity check coding, i.e., P0=C0+C1+...+C5; and the 1st check data packet PI selects all even-number Turbo error correction code blocks to perform single parity check coding with P0, i.e., P1=C0+C2+C4+P0, herein C0-C5 are 6 Turbo error correction code blocks, thereby 2 check data blocks P0 and P1 are obtained, and lengths are respectively 672 bits.

In step 307, constellation mapping modulation is performed on the $a$=6 information data packets to obtain a first modulation symbol sequence with a length of k1=2016, a constellation mapping modulation mode is QPSK and a modulation order is 2; and constellation mapping modulation is performed on the b=2 check data packets to obtain a second modulation symbol sequence with a length of k2=336, a constellation mapping modulation mode is 16QAM and a modulation order is 4.

Example four

A difference of example four from example one lies in step 308 as follow.

In step 308, the first modulation symbol sequence is mapped to $M_{ofdm1}$=6 continuous OFDM symbols according to a time order, including that: the first modulation symbol sequence is mapped to (Nsc1=336)$\times$($M_{ofdm1}$=6) two-dimensional time-frequency resource according to an order of frequency first and then time, herein Nsc1=336 constellation mapping modulation symbols mapped to an ith OFDM symbol are firstly interleaved and then are sequentially mapped to Nsc1=336 non-reference signal subcarriers of the ith OFDM symbol; or Nsc1=336 constellation mapping modulation symbols mapped to an ith OFDM symbol are mapped to Nsc1=336 non-reference signal subcarriers of the ith OFDM symbol according to a random mapping relation table; or Nsc1=336 constellation mapping modulation symbols mapped to an ith OFDM symbol are firstly sequentially mapped to a logical buffer memory, and then data in the logical buffer memory are mapped to Nsc1=336 non-reference signal subcarriers of the ith OFDM symbol according to a random mapping relation table, herein i=0, 1,..., 5.

In addition, the second modulation symbol sequence is mapped to $M_{ofdm2}$=1 continuous OFDM symbol according to a time order, including that: the second modulation symbol sequence is mapped to (Nsc2=336)$\times$($M_{ofdm2}$=1) two-dimensional time-frequency resource according to an order of frequency fist and then time, herein Nsc2=336 constellation mapping modulation symbols mapped to an ith OFDM symbol are firstly interleaved and then are sequentially mapped to Nsc2=336 non-reference signal subcarriers of the ith OFDM symbol; or Nsc2=336 constellation mapping modulation symbols mapped to an ith OFDM symbol are mapped to Nsc2=336 non-reference signal subcarriers of the ith OFDM symbol according to a random mapping relation table; or Nsc2=336 constellation mapping modulation symbols mapped to an ith OFDM symbol are firstly sequentially mapped to a logical buffer memory, and then data in the logical buffer memory are mapped to Nsc2=336 non-reference signal subcarriers of the ith OFDM symbol according to a random mapping relation table, herein i=6.

Herein, i is a sending order number and an OFDM symbol with a smaller sending order number is sent more early. The interleaving method is row-row and col-column block interleaving of row-input column-output or random interleaving, and the random mapping relation table is an input-output relation table obtained through row-row and col-column block interleaving of row-input column-output or a random input-output relation table, herein row and col are both integers greater than 0, row=21 and col=16.

Example five

A difference of example five from example one lies in step 308 and step 309 as follows.

In step 308, the first modulation symbol sequence is mapped to $M_{ofdm1}$=7 continuous OFDM symbols according to a time order, including that: the first modulation symbol sequence is mapped to (Nsc1=228)×($M_{ofdm1}$=7) two-dimensional time-frequency resource according to an order of frequency fist and then time, herein Nsc1=228 constellation mapping modulation symbols mapped to an ith OFDM symbol are sequentially mapped to Nsc1=228 non-reference signal subcarriers of the ith OFDM symbol, i=0, 1,..., 6; and the second modulation symbol sequence is mapped to $M_{ofdm2}$=7 continuous OFDM symbol according to a time order, including that: the second modulation symbol sequence is mapped to (Nsc2=48)×($M_{ofdm2}$=7) two-dimensional time-frequency resource according to an order of frequency first and then time, herein Nsc2=48 constellation mapping modulation symbols mapped to an ith OFDM symbol are sequentially mapped to Nsc2=48 non-reference signal subcarriers of the ith OFDM symbol, i=7, 8,..., 13, herein i is a sending order number and an OFDM symbol with a smaller order number is sent more early.

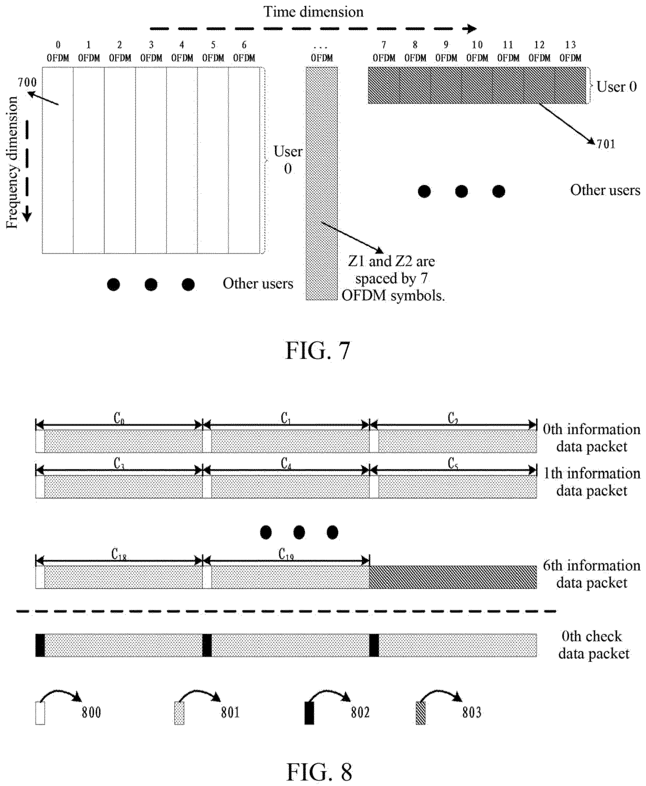

In step 309, a sending process is that: as illustrated in FIG. 6, after OFDM symbols including a first modulation symbol sequence 600 are completely sent, OFDM symbols including a second modulation symbol sequence 601 are directly sent; or as illustrated in FIG. 7, after OFDM symbols including a first modulation symbol sequence 700 are completely sent, OFDM symbols including a second modulation symbol sequence 701 are sent after waiting for 7 OFDM symbols.

Example six

In an OFDMA communication system, a single OFDM symbol has 1024 subcarriers and the number of effective data subcarriers is 800. The present example is used for transmitting data from a first transmission node which is a base station 101 to a second transmission node which is a mobile user 100, as illustrated in FIG. 1. A method according to the present invention at least includes the following steps, as illustrated in FIG. 3.

In step 300, code block segmentation is performed on a source data packet to be transmitted with a length of 9620 bits to obtain d=20 data blocks, herein a length of each data block is 481 bits.

In step 301, a CRC sequence with a length of h=8 bits is respectively added to each data block, herein a length of each data block added with the CRC sequence becomes 489 bits.

In step 302, after the CRC sequence is added, first-time filling is performed on each data block, herein the first-time filling is to fill mli=15 bits to an ith data block, and a filled bit is '0', i=0, 1,..., 19, such that the length of each data block reaches 504 bits.

In step 303, Turbo error correction coding is respectively performed on d=20 data blocks added with the CRC sequence to obtain a data block with the total number of bits being 13440, herein a code length of Turbo error correction coding is 672 and a code rate is 3/4.

In step 304, second-time filling is performed on total data blocks after Turbo error correction coding is performed, herein the second-time filling is to add m2=672 bits to a head or tail of an entire error correction code data block, and a filled bit is '0'.

In step 305, grouping is performed to obtain a=7 information data packets with a same length, herein each information data packet has 3x672 bits.

In step 306, packet coding is performed on a=7 information data packets to obtain b=1 check data packet, herein a length of the check data packet is 3x672 bits and a single parity check coding method is used in the packet coding.

In step 307, a constellation mapping modulation mode is 64QAM and a modulation order is 6, constellation mapping modulation is performed on the a=7 information data packets with the number of effective bits being 20×657 (as illustrated in FIG. 8, bits 800 of the first-time filling and bits 803 of the second-time filling are not included) to obtain a first modulation symbol sequence with a length of k1=2190, and constellation mapping modulation is performed on the b=1 check data packet with the number of effective bits being 3×657 (as illustrated in FIG. 8, all bits not including 7 bits subjected to parity check coding in the packet coding method belong to results 802 of first-time filled bits and second-time filled bits) to obtain a second modulation symbol sequence (which needs to be filled with 3 bits) with a length of k2=329.

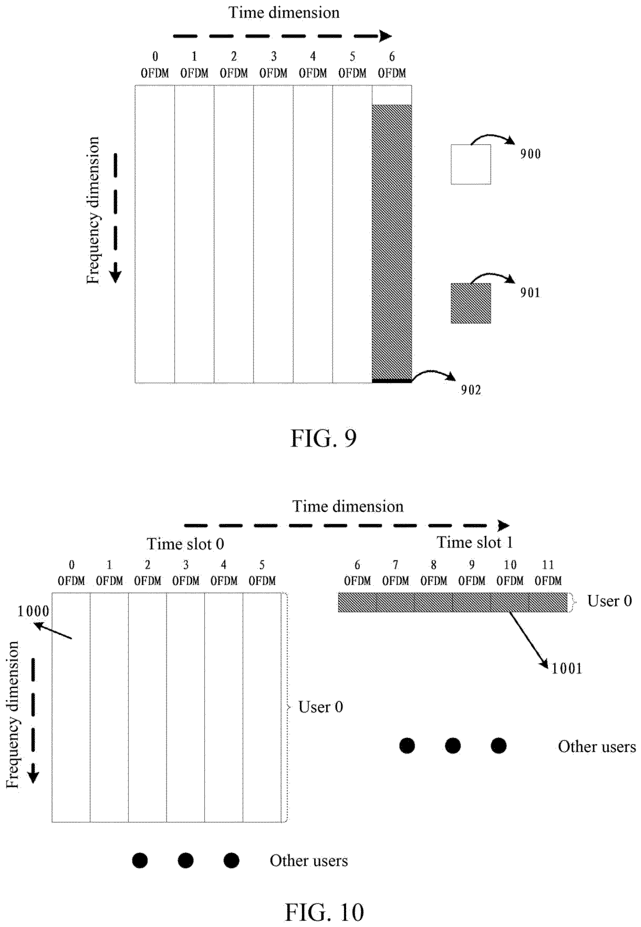

In step 308, the first modulation symbol sequence and the second modulation symbol sequence are mapped to 360×7 two-dimensional time-frequency resource on 7 continuous OFDM symbols according to a time order, as illustrated in FIG. 9, herein 360 constellation mapping modulation symbols mapped to an ith OFDM symbol are sequentially mapped to 360 non-reference signal subcarriers of the ith OFDM symbol, i=0, 1,..., 6; and herein the first modulation symbol sequence is mapped to 0th to 6th OFDM symbols 900, and the second modulation symbol sequence is mapped to a 6th OFDM symbol 901 (a last subcarrier of the 6th OFDM symbol in the two-dimensional time-frequency resource is a filled symbol 902), i.e., in sending order numbers, a first OFDM symbol in the $M_{ofdm2}$=1 OFDM symbol to which the second modulation symbol sequence is mapped is a last OFDM symbol in the $M_{ofdm1}$=7 OFDM symbols to which the first modulation symbol sequence is mapped.

In step 309, a base station 101 sends the 7 OFDM symbols to a mobile user 100 according to sending order numbers.

Example seven

A difference of example seven from example six lies in step 308 as follow.

In step 308, the first modulation symbol sequence and the second modulation symbol sequence are mapped to two-dimensional time-frequency resource on $M_{ofdm1}$=7 continuous OFDM symbols according to a time order, herein d is the number of Turbo code blocks (d=20), c is the number of Turbo code blocks included in each information data packet (c=3), b is the number of check data packets (b=1) and $M_{ofdm}$ is the total number of needed OFDM symbols ($M_{ofdm}$=7); according to a judgment condition that whether (d+bxc) is greater than $M_{ofdm}$, if it is judged that the condition is satisfied at that moment, 360 constellation mapping modulation symbols mapped to an ith OFDM symbol are interleaved firstly and then the constellation mapping modulation symbols are sequentially mapped to 360 non-reference signal subcarriers of the ith OFDM symbol; or 360 constellation mapping modulation symbols mapped to an ith OFDM symbol are mapped to 360 non-reference signal subcarriers of the ith OFDM symbol according to a random mapping relation table; or 360 constellation mapping modulation symbols mapped to an ith OFDM symbol are firstly sequentially mapped to a logical buffer memory, and then data in the logical buffer memory are mapped to 360 non-reference signal subcarriers of the ith OFDM symbol according to a random mapping relation table, herein i=0, 1, ..., 6.

Herein, i is a sending order number and an OFDM symbol with a smaller sending order number is sent more early. The interleaving method is row-row and col-column block interleaving of row-input column-output or random interleaving, and the random mapping relation table is an input-output relation table obtained through row-input column-output row-row and col-column block interleaving or a random input-output relation table, herein row and col are both integers greater than 0, row=20 and col=18.

Example eight

A difference of example eight from example six lies in step 308 as follow.

In step 308, the first modulation symbol sequence is mapped to $M_{ofdm1}$=6 continuous OFDM symbols according to a time order, including that, as illustrated in FIG. 10, the first modulation symbol sequence is mapped to (Nsc1=365)×($M_{ofdm1}$=6) two-dimensional time-frequency resource 1000 according to an order of frequency first and then time, herein d is the number of Turbo code blocks (d=20); and according to a judgment condition that whether d is greater than $M_{ofdm1}$, if it is judged that the condition is satisfied at that moment, Nsc1=365 constellation mapping modulation symbols mapped to an ith OFDM symbol are interleaved firstly and then the constellation mapping modulation symbols are sequentially mapped to Nsc1=365 non-reference signal subcarriers of the ith OFDM symbol; or Nsc1=365 constellation mapping modulation symbols mapped to an ith OFDM symbol are mapped to Nsc1=365 non-reference signal subcarriers of the ith OFDM symbol according to a random mapping relation table; or Nsc1=365 constellation mapping modulation symbols mapped to an ith OFDM symbol are firstly sequentially mapped to a logical buffer memory, and then data in the logical buffer memory are mapped to Nsc1=365 non-reference signal subcarriers of the ith OFDM symbol according to a random mapping relation table, herein i=0, 1, ..., 5.

In addition, the second modulation symbol sequence is mapped to $M_{ofdm2}$=6 continuous OFDM symbols according to a time order, including that, as illustrated in FIG. 10, the second modulation symbol sequence is mapped to (Nsc2=55)×($M_{ofdm2}$=6) two-dimensional time-frequency resource 1001 (the last subcarrier is a filled symbol) according to an order of frequency first and then time, herein b is the number of check data packets (b=1) and c is the number of Turbo code blocks included in each information data packet (c=3); and according to a judgment condition that whether b×c is greater than $M_{ofdm2}$, if it is judged that the condition is not satisfied at that moment, and as illustrated in FIG. 10, Nsc2=55 constellation mapping modulation symbols mapped to an ith OFDM symbol are sequentially mapped to Nsc2=55 non-reference signal subcarriers of the ith OFDM symbol, herein i=6, 7, ..., 11.

Herein, i is a sending order number and an OFDM symbol with a smaller sending order number is sent more early. The interleaving method is row-row and col-column block interleaving of row-input column-output or random interleaving, and the random mapping relation table is an input-output relation table obtained through row-row and col-column block interleaving of row-input column-output or a random input-output relation table, herein row and col are both integers greater than 0, row=73 and col=5.

Example nine

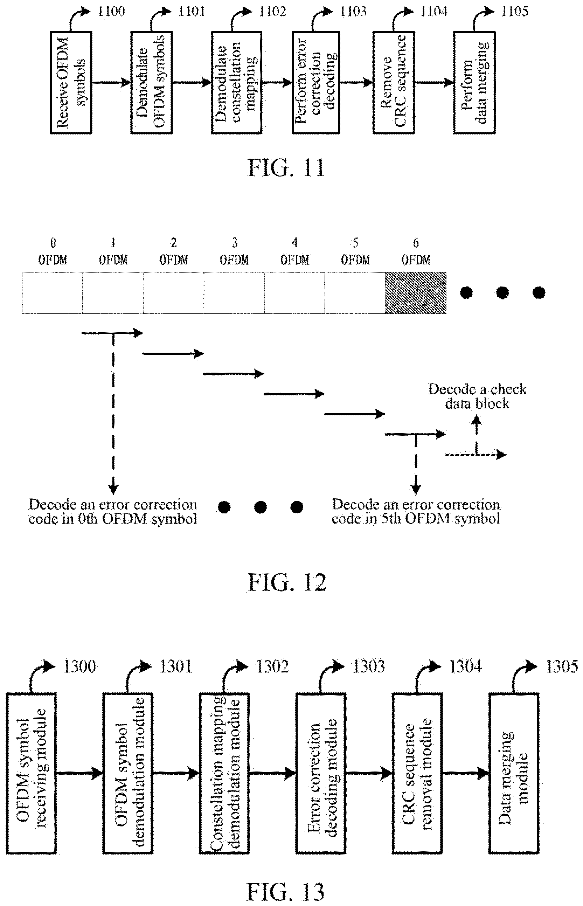

Example nine is applicable to a second transmission node (mobile user 100) in example six. As illustrated in FIG. 11, the following steps 1100-1105 are at least included.

In step 1100, an ith OFDM symbol is received.

In step 1101, the ith OFDM symbol is demodulated, and 360 constellation mapping modulation symbols born on the ith OFDM symbol are obtained according to a configuration of subcarrier resource configured by a system and used for transmitting to a mobile user 100.

In step 1102, constellation mapping is demodulated, a modulation mode is 64QAM and a modulation order is 6, and the 360 constellation mapping modulation symbols are demodulated into $360 \times 6$ soft bit information.

In step 1103, error correction decoding is performed to decode all Turbo codes which belong to the ith OFDM symbol.

In step 1104, CRC sequence removal is performed to remove CRC sequences in all Turbo code blocks.

In step 1105, data merging is performed to merge all pure data obtained after CRC sequences are removed to obtain a source data packet sent by a first transmission node (base station 101).

As illustrated in FIG. 12, once an ith OFDM symbol is received, all error correction code blocks (Turbo code blocks) which belong to the ith OFDM symbol may be decoded, then error correction code blocks in an (i+1)th OFDM symbol are sequentially decoded, and thus by using a streamline-link mode, the decoding speed can be improved, herein i=0, 1, 2,..., 6.

Since 3 data blocks in the check data packet also belong to a Turbo code word space and can also be decoded, and the number of Turbo code blocks is 23; after all Turbo code blocks are decoded, whether a code word is erroneous is judged according to a CRC sequence and/or Turbo code word space, if it is erroneous, soft bit information of a Turbo correction code block is saved, and if it is correct, a cumulative XOR result C of all correct Turbo code blocks is calculated, $C = C \oplus C_j$; according to a judgment condition that whether first 20 Turbo code blocks are correctly decoded or all 23 Turbo code blocks are correctly decoded, if the judgment condition is satisfied, the process is exited; if the judgment condition is not satisfied, through a packet decoding method, soft bit information of each erroneous Turbo code word is demodulated out by using soft bit information of erroneous Turbo code blocks, a cumulative XOR result of correct Turbo code words and an XOR relation among all code blocks in packet coding, the erroneous Turbo code blocks are decoded, and then according to the judgment condition that whether first 20 Turbo code blocks are correctly decoded or all 23 Turbo code blocks are correctly decoded, if the judgment condition is satisfied, the process is exited; and if the judgment condition is not satisfied, the process is exited or iteration is continuously performed to perform packet decoding, herein a maximum number of iterations is 5.

Example ten

In an OFDMA communication system, a single OFDM symbol has 1024 subcarriers and the number of effective data subcarriers is 800. The present example is used for transmitting data from a first transmission node which is a base station 101 to a second transmission node which is a mobile user 100, as illustrated in FIG. 1, herein the number of OFDM symbols is $M_{ofdm}$=6, the number of subcarriers on each OFDM symbol allocated by a system and used for transmitting data from the first transmission node to the second transmission node is Nsc=512, a modulation order is Mu=4, an error correction code rate is R=1/2, the number of error correction code blocks in each information data packet is c=1, the number of error correction code blocks born on each OFDM symbol is k0=1, the number of bits of a CRC sequence is h=8 and the number of check data packets obtained through packet coding is b=1. A method according to the present invention at least includes the following steps, as illustrated in FIG. 3.

In step 300, according to the following parameters: a length L=5080 of a source data packet, the number of subcarriers Nsc=512 on each OFDM symbol allocated by a system and used for transmitting data from the first transmission node to the second transmission node, a modulation order Mu=4, an error correction code rate R=1/2, the number $M_{ofdm}$=6 of OFDM symbols, the number c=1 of error correction code blocks in each information data packet, the number of error correction code blocks k0=1 born on each OFDM symbol, the number of bits h=8 of each CRC sequence and the number of check data packets b=1 obtained through packet coding, calculation is performed to obtain the number of data blocks $d=M_{ofdm} \times k0-b \times c=5$, herein the size of each data block is L/d=1016, and code block segmentation is performed on the source data packet to be transmitted with the length of L=5080 bits to obtain d=5 data blocks, herein a length of each data block is 1016 bits.

In step 301, a CRC sequence with a length of h=8 bits is respectively added to each data block, herein a length of each data block added with the CRC sequence becomes 1024 bits.

In step 302, after the CRC sequence is added, first-time filling is performed on each data block, herein the first-time filling is to fill mli=0 bits to an ith data block, and a filled bit is '0', i=0, 1,..., 4, such that the length of each data block reaches 1024 bits.

In step 303, Turbo error correction coding is respectively performed on d=5 data blocks added with the CRC sequence to obtain a data block with the total number of bits being 10240.

In step 304, second-time filling is performed after Turbo error correction coding is performed, herein the second-time filling is to add m2=0 bits to a head or tail of an entire error correction code data block, and a filled bit is '0'.

In step 305, grouping is performed to obtain $a$=5 information data packets with a same length, herein each information data packet has 2048 bits.

In step 306, packet coding is performed on $a$=5 information data packets to obtain b=1 check data packet, herein a length of the check data packet is 2048 bits and a single parity check coding method is used in the packet coding.

In step 307, a constellation mapping modulation mode is 64QAM and a modulation order is 4, and constellation mapping modulation is performed on the $a$=5 information data packets with the number of effective bits being 10240 to obtain a first modulation symbol sequence with a length of k1=2560, and constellation mapping modulation is performed on the b=1 check data packet with the number of effective bits being 2048 to obtain a second modulation symbol sequence with a length of k2=512.

In step 308, the first modulation symbol sequence and the second modulation symbol sequence are mapped to 512×6 two-dimensional time-frequency resource on 6 continuous OFDM symbols according to a time order, herein 512 constellation mapping modulation symbols mapped to an ith OFDM symbol are sequentially mapped to 512 non-reference signal subcarriers of the ith OFDM symbol, i=0, 1,..., 5; and herein the first modulation symbol sequence is mapped to 0th to 4th OFDM symbols, and the second modulation symbol sequence is mapped to the 5th OFDM symbol, herein i is a sending order number of an OFDM symbol and an OFDM symbol with a smaller sending order number is sent more early.

In step 309, a base station 101 sends the 7 OFDM symbols to a mobile user 100 according to sending order numbers.

Example eleven

A difference of example eleven from example one and example ten lies in step 303, where the used error correction coding method is convolutional coding, LDPC coding, RS coding, Hamming coding, product coding or BCH coding.

Embodiment two

An embodiment of the present invention provides a data packet processing apparatus in an OFDMA system, applied to a sending end, at least including a code block segmentation module, a CRC sequence adding module, an error correction coding module, a grouping module, a packet coding module, a packet coding module, a constellation mapping modulation module, an OFDM modulation module and a sending module.

The code block segmentation module is configured to perform code block segmentation on a source data packet to be transmitted to obtain d data blocks.

The CRC sequence adding module is configured to respectively add a Cyclic Redundancy Check CRC sequence to each data block.

The error correction coding module is configured to respectively perform error correction coding on the d data blocks added with the CRC sequence.

The grouping module is configured to group the data blocks on which the error correction coding is performed to obtain $a$ information data packets with a same length.

The packet coding module is configured to perform packet coding on the $a$ information data packets to obtain b check data packets.

The constellation mapping modulation module is configured to perform constellation mapping modulation on the $a$ information data packets to obtain a first modulation symbol sequence with a length of k1 and perform constellation mapping modulation on the b check data packets to obtain a second modulation symbol sequence with a length of k2; or perform constellation mapping modulation on the $a$ information data packets and the b check data packets, herein modulation symbols including the $a$ information data packets form a first modulation symbol sequence with a length of k1, and other modulation symbols form a second modulation symbol sequence with a length of k2.

The OFDM modulation module is configured to map the first modulation symbol sequence to $M_{ofdm1}$ continuous OFDM symbols according to a time order, and map the second modulation symbol sequence to $M_{ofdm2}$ continuous OFDM symbols according to a time order, herein in sending order numbers, a first OFDM symbol in the $M_{ofdm1}$ OFDM symbols is sent prior to a first OFDM symbol in the $M_{ofdm2}$ OFDM symbols.

The sending module is configured to send the $M_{ofdm1}$ OFDM symbols and the $M_{ofdm2}$ OFDM symbols to a second transmission node according to the sending order numbers.

Herein $a$ is an integer greater than or equal to 2, d is an integer greater than or equal to 2, b is an integer greater than or equal to 1, k1 and k2 are both integers greater than or equal to 1, and $M_{ofdm1}$ and $M_{ofdm2}$ are both integers greater than or equal to 1.

Further, in sending order numbers, a first OFDM symbol in the $M_{ofdm2}$ OFDM symbols is a last OFMA symbol in the $M_{ofdm1}$ OFDM symbols or an xth OFDM symbol after the last OFMA symbol in the $M_{ofdm1}$ OFDM symbols, herein x is greater than or equal to 1.

Further, after the CRC sequence adding module and before the error correction coding module, the apparatus includes a first-time filling module, and the first-time filling module is configured to fill mli bits to an ith data block, herein mli is an integer greater than or equal to 0, i=0, 1,..., d-1, and d is an integer greater than or equal to 2.

Further, after the error correction coding module and before the grouping module, the apparatus includes a second-time filling module, and the second-time filling module is configured to add m2 bits to a head or tail of an entire error correction code data block, herein the entire error correction code data block includes d error correction code blocks, d is an integer greater than or equal to 2 and m2 is an integer greater than or equal to 0.

Further, the grouping module is configured to perform grouping to obtain *a* information data packets with a same length, and the number of bits of each information data packet is k×c, herein *a* is an integer greater than or equal to 2, k is the number of bits of an error correction code block, k is an integer greater than or equal to 1 and c is an integer greater than or equal to 1.

Further, the CRC sequence adding module is configured to respectively add a CRC sequence to each data block. Herein a length of each CRC sequence is h bits, and h is an integer greater than or equal to 1.

Further, the constellation mapping modulation module is configured to perform constellation mapping modulation on the *a* information data packets to obtain a first modulation symbol sequence with a length of kl, and all bits on which constellation mapping modulation is performed do not include bit data filled by the first-time filling module and the second-time filling module, herein *a* is an integer greater than or equal to 2 and k1 is an integer greater than or equal to 1.

Further, the code block segmentation module is configured to perform code block segmentation on a source data packet to be transmitted to obtain d data blocks, herein a length of each data block depends on the following parameters: a length of a source data packet, the number of subcarriers on each OFDM symbol allocated by system and used for transmitting data from first transmission node to second transmission node, a modulation order, an error correction code rate, the number of OFDM symbols, the number of error correction code blocks in an information data packet, the number of error correction code blocks born on each OFDM symbol, the number of bits of CRC sequence and the number of check data packets obtained through packet coding, herein the modulation order is the number of bits carried by a constellation mapping modulation symbol and d is an integer greater than or equal to 2.

Further, a modulation order of the first modulation symbol sequence in the constellation mapping modulation module is Mod1' and a modulation order of the second modulation symbol sequence is Mod2', herein Mod1' and Mod2' are integers from 1 to 16; or the first modulation symbol sequence includes q1 modulation symbol subsequences, a modulation order in the subsequences is the same, Modi is a modulation order used by an ith modulation symbol subsequence in the first modulation symbol sequence, Modi is an integer from 1 to 16, i=0, 1,..., (q1-1), the second modulation symbol sequence includes q2 modulation symbol subsequences, a modulation order in the subsequences is the same, Modj is a modulation order used by a jth modulation symbol subsequence in the second modulation symbol sequence, Modj is an integer from 1 to 16 and j=0, 1,..., (q2-1), herein the modulation order is the number of bits carried by a constellation mapping modulation symbol, and q1 and q2 are both integers greater than or equal to 1.

A table of relations among the number of bits carried by constellation mapping modulation symbol, the modulation order and the modulation mode is as shown in Table 2:

Table 2

| Number of carried bits | Modulation order | Modulation mode | Number of carried bits | Modulation order | Modulation mode |
|---|---|---|---|---|---|
| 1 | 1 | BPSK | 9 | 9 | 512QAM |
| 2 | 2 | QPSK (4QAM) | 10 | 10 | 1024QAM |
| 3 | 3 | 8PSK (8QAM) | 11 | 11 | 2048QAM |
| 4 | 4 | 16QAM | 12 | 12 | 4096QAM |
| 5 | 5 | 32QAM | 13 | 13 | 8192QAM |
| 6 | 6 | 64QAM | | | |
| 7 | 7 | 128QAM | | | |
| 8 | 8 | 256QAM | | | |

Further, the packet coding module is configured to perform packet coding on the *a* information data packets to obtain b check data packet, including: using ith bits in all *a* information data packets to form a sequence Si with a length of a bits, and performing single parity check coding, b-multiple bit parity check coding, Hamming coding or RS coding to Si to obtain a check sequence Ti with a length of b bits; and sequentially combining jth bits of all check sequences Ti to obtain a check data packet Pj with a length of n bits;

herein i=0, 1,..., n-1, n is a length of an error correction code block set, n is an integer greater than 1, j=0, 1,..., b-1, b is an integer greater than or equal to 1, and *a* is an integer greater than or equal to 2.

Further, in the OFDM symbol modulation module, the first modulation symbol sequence is mapped to $M_{ofdm1}$ continuous OFDM symbols, including: mapping the first modulation symbol sequence to $Nsc1 \times M_{ofdm1}$ two-dimensional time-frequency resource according to an order of frequency first and then time, herein frequency dimension is used for identifying index numbers of subcarriers in OFDM symbols and time dimension is used for identifying index numbers of OFDM symbols, the $Nsc1 \times M_{ofdm1}$ two-dimensional time-frequency resource is $M_{ofdm1}$ continuous OFDM symbols in time dimension, which are allocated by a system and are used for transmitting data from a first transmission node to a second transmission node, and Nscl continuous non-reference signal subcarriers in frequency dimension of each OFDM symbol, Nscl is an integer greater than or equal to 1 and $M_{ofdm1}$ is an integer greater than or equal to 1.

Further, mapping the first modulation symbol sequence to $Nsc1 \times M_{ofdm1}$ two-dimensional time-frequency resource according to an order of frequency first and then time, a method for mapping to Nscl continuous non-reference signal subcarriers of an ith OFDM symbol includes one of the following modes:

mode 1: firstly interleaving Nscl constellation mapping modulation symbols mapped to an ith OFDM symbol and then sequentially mapping the constellation mapping modulation symbols to Nscl non-reference signal subcarriers of the ith OFDM symbol, or mapping Nscl constellation mapping modulation symbols mapped to an ith OFDM symbol to Nscl non-reference signal subcarriers of the ith OFDM symbol according to a random mapping relation table, or firstly sequentially mapping Nscl constellation mapping modulation symbols mapped to an ith OFDM symbol to a logical buffer memory, and then mapping data in the logical buffer memory to Nscl non-reference signal subcarriers of the ith OFDM symbol according to a random mapping relation table; and

mode 2: sequentially mapping Nscl constellation mapping modulation symbols mapped to an ith OFDM symbol to Nscl non-reference signal subcarriers of the ith OFDM symbol,
herein i=0, 1,..., $M_{ofdm1}$-1, Nscl is an integer greater than or equal to 1 and $M_{ofdm1}$ is an integer greater than or equal to 1.

Further, if d is greater than $M_{ofdm1}$, the implementation is performed according to mode 1; otherwise, the implementation is performed according to mode 2, herein d is the number of error correction code blocks, d is an integer greater than or equal to 2, and $M_{ofdm1}$ is an integer greater than or equal to 1.

Further, in the OFDM symbol modulation module, mapping the second modulation symbol sequence to $M_{ofdm2}$ continuous OFDM symbols according to a time order includes: mapping the second modulation symbol sequence to $Nsc2 \times M_{ofdm2}$ two-dimensional time-frequency resource according to an order of frequency first and then time, herein frequency dimension is used for identifying index numbers of subcarriers in OFDM symbols, time dimension is used for identifying index numbers of OFDM symbols, the $Nsc2 \times M_{ofdm2}$ two-dimensional time-frequency resource is $M_{ofdm2}$ continuous OFDM symbols in time dimension, which are allocated by a system and are used for transmitting data from a first transmission node to a second transmission node, and Nsc2 continuous non-reference signal subcarriers in frequency dimension of each OFDM symbol, Nsc2 is an integer greater than or equal to 1 and $M_{ofdm2}$ is an integer greater than or equal to 1.

Further, mapping the second modulation symbol sequence to $Nsc2 \times M_{ofdm2}$ two-dimensional time-frequency resource according to an order of frequency first and then time, a method for mapping to Nsc2 continuous non-reference signal subcarriers of an ith OFDM symbol includes one of the following modes:

mode 1: firstly interleaving Nsc2 constellation mapping modulation symbols mapped to an ith OFDM symbol and then sequentially mapping the constellation mapping modulation symbols to Nsc2 non-reference signal subcarriers of the ith OFDM symbol, or mapping Nsc2 constellation mapping modulation symbols mapped to an ith OFDM symbol to Nsc2 non-reference signal subcarriers of the ith OFDM symbol according to a random mapping relation table, or firstly sequentially mapping Nsc2 constellation mapping modulation symbols mapped to an ith OFDM symbol to a logical buffer memory, and then mapping data in the logical buffer memory to Nsc2 non-reference signal subcarriers of the ith OFDM symbol according to a random mapping relation table; and

mode 2: sequentially mapping Nsc2 constellation mapping modulation symbols mapped to an ith OFDM symbol to Nsc2 non-reference signal subcarriers of the ith OFDM symbol,
herein i=0, 1,..., $M_{ofdm2}$-1, Nsc2 is an integer greater than or equal to 1 and $M_{ofdm2}$ is an integer greater than or equal to 1.

Further, if (bxc) is greater than $M_{ofdm2}$, the implementation is performed according to mode 1; otherwise, the implementation is performed according to mode 2, herein b is the number of check data packets, b is an integer greater than or equal to 1, c is the number of error correction code blocks contained in each information data packet, c is an integer greater than or equal to 1, and $M_{ofdm2}$ is an integer greater than or equal to 1.

Further, in the OFDM symbol modulation module, in the process of mapping the first modulation symbol sequence and the second modulation symbol sequence to OFDM symbols, mapping to Nsc continuous non-reference signal subcarriers of an ith OFDM symbol includes one of the following modes:

mode 1: firstly interleaving Nsc constellation mapping modulation symbols mapped to an ith OFDM symbol and then sequentially mapping the constellation mapping modulation symbols to Nsc non-reference signal subcarriers of the ith OFDM symbol, or mapping Nsc constellation mapping modulation symbols mapped to an ith OFDM symbol to Nsc non-reference signal subcarriers of the ith OFDM symbol according to a random mapping relation table, or firstly sequentially mapping Nsc constellation mapping modulation symbols mapped to an ith OFDM symbol to a logical buffer memory, and then mapping data in the logical buffer memory to Nsc non-reference signal subcarriers of the ith OFDM symbol according to a random mapping relation table; and

mode 2: sequentially mapping Nsc constellation mapping modulation symbols mapped to an ith OFDM symbol to Nsc non-reference signal subcarriers of the ith OFDM symbol;
herein Nsc is the number of non-reference signal subcarriers in an ith OFDM symbol allocated by a system and used for transmitting data from a first transmission node to a second transmission node, Nsc is an integer greater than or equal to 1, i=0, 1,..., $M_{ofdm}$-1, $M_{ofdm}$ is the number of all OFDM symbols to which the first modulation symbol sequence and the second modulation symbol sequence are mapped, and $M_{ofdm}$ is an integer greater than 0.

Further, if (d+b×c) is greater than $M_{ofdm}$, the implementation is performed according to mode 1; otherwise, the implementation is performed according to mode 2, herein d is the number of error correction code blocks, d is an integer greater than or equal to 2, b is the number of check data packets, b is an integer greater than or equal to 1, c is the number of error correction code blocks contained in each information data packet, c is an integer greater than or equal to 1, $M_{ofdm}$ is the number of all OFDM symbols to which the first modulation symbol sequence and the second modulation symbol sequence are mapped, and $M_{ofdm}$ is an integer greater than 0.

Further, the interleaving method is row-row and col-column block interleaving of row-input column-output or random interleaving, and the random mapping relation table is an input-output relation table obtained through row-row and col-column block interleaving of row-input column-output or a random input-output relation table, herein row and col are both integers greater than 0.

Further, a bit length of each error correction code block in the information data packet is e, $e=m×Nsc1×g$, herein m is the number of bits carried by each constellation mapping modulation symbol, m is an integer greater than or equal to 1, Nscl is the number of non-reference signal subcarriers in an ith OFDM symbol configured by a system and used for transmitting data from a first transmission node to a second transmission node, i=0, 1,..., $M_{ofdm1}$-1, Nscl is an integer greater than or equal to 1, a specific numerical value of g is 1, 2, 3, 4, 6 or 7, $M_{ofdm1}$ is the number of OFDM symbols to which the first modulation symbol sequence is mapped, and $M_{ofdm1}$ is an integer greater than 0.

An embodiment of the present invention further provides another data packet processing apparatus in an OFDMA system, applied to a receiving end, at least including an OFDM symbol receiving module, an OFDM symbol demodulation module, a constellation mapping demodulation module, an error correction decoding module, a CRC sequence removal module, a data merging module.

The OFDM symbol receiving module is configured to receive OFDM symbols.

The OFDM symbol demodulation module is configured to obtain Nsc constellation mapping modulation symbols born on an ith OFDM symbol according to a configuration situation of subcarrier resource configured by a system and used for transmitting data from a first transmission node to a second transmission node.

The constellation mapping demodulation module is configured to demodulate the Nsc constellation mapping modulation symbols into soft bit information.

The error correction decoding module is configured to perform error correction decoding on the demodulated soft bit information.

The CRC sequence removal module is configured to remove CRC sequences in all error correction code blocks.

The data merging module is configured to merge all data after the CRC sequences are removed to obtain a source data packet sent by the first transmission node.

Herein i=0, 1,..., $M_{ofdm}$-1, $M_{ofdm}$ is the number of all OFDM symbols, $M_{ofdm}$ is an integer greater than 1 and Nsc is an integer greater than or equal to 1.

Further, the error correction decoding module at least configured to:
since bxc data blocks in check data packets also belong to an error correction code word space and can also be decoded, the number of error correction code blocks is d+bxc, after all error correction code blocks are decoded, judge whether a code word is erroneous according to a CRC sequence and/or error correction code word space, if it is erroneous, save soft bit information of an erroneous error correction code block, and if it is correct, calculate a cumulative XOR result of all error correction code blocks which are correctly decoded; according to a judgment condition that whether first d error correction code blocks are correctly decoded or all d+bxc error correction code blocks are correctly decoded, if the judgment condition is satisfied, exist the process; if the judgment condition is not satisfied, through a packet decoding method, demodulate out soft bit information of each erroneous error correction code word by using soft bit information of erroneous error correction code blocks, a cumulative XOR result of correct error correction code words and an XOR relation among all code blocks in packet coding, and decode the erroneous error correction code blocks, and then according to the judgment condition that whether first d error correction code blocks are correctly decoded or all d+bxc error correction code blocks are correctly decoded, if the judgment condition is satisfied, exist the process; and if the judgment condition is not satisfied, exist the process exits or continuously perform iteration to perform packet decoding, herein a maximum number of iterations is MAX.

Herein d is the number of error correction code blocks, d is an integer greater than or equal to 2, b is the number of check data packets, b is an integer greater than or equal to 1, c is the number of error correction code blocks contained in each information data packet, c is an integer greater than or equal to 1 and MAX is an integer greater than 1.

For demodulating out soft bit information of each erroneous error correction code word by using soft bit information of erroneous error correction code blocks, a cumulative XOR result of correct error correction code words and an XOR relation among all code blocks in packet coding, a specific expression for calculating soft bit information $LLR'_{err(i,j)}$ of a jth bit of an ith erroneous error correction code block is as follow:

$$LLR'_{err(i,j)} = LLR_{err(i,j)} + k0 \times sign_{err(i,j)} \times MS_{err(i,j)} \times C_{crt(j)}$$

herein parameter $LLR_{err(i,j)}$ is saved soft bit information of a jth bit of an ith erroneous error correction code block, parameter k0 is a real number greater than 0, $sign_{err(i,j)}$ is sign-bit cumulative result of soft bit information of jth bits of all other erroneous error correction code blocks except the ith erroneous error correction code block, $MS_{err(i,j)}$ is an amplitude result provided by soft bit information of jth bits of all other erroneous error correction code blocks (here a minimum value algorithm is used), $C_{crt(j)}$ is a sign-bit cumulative result of soft bit information of jth bits of all correct error correction code blocks, and specific expressions are as follows:

$$sign_{err(i,j)} = sign(LLR_{err(0,j)}) \times \cdots \times sign(LLR_{err(i-1,j)}) \times sign(LLR_{err(i+1,j)}) \times \cdots \times sign(LLR_{err(enum,j)})$$

$$MS_{err(i,j)} = \min\left(abs(LLR_{err(0,j)}), \cdots, abs(LLR_{err(i-1,j)}), abs(LLR_{err(i+1,j)}), \cdots, abs(LLR_{err(enum,j)})\right)$$

$$C_{crt(j)} = sign(LLR_{crt(0,j)}) \times sign(LLR_{crt(1,j)}) \times \cdots \times sign(LLR_{crt(cnum,j)})$$

Further, Turbo coding, convolutional coding, LDPC coding, RS coding, Hamming coding, product coding or BCH coding is used as an error correction coding method of the error correction code blocks.

The technical solution of the present invention will be further described below through specific examples.

Example one

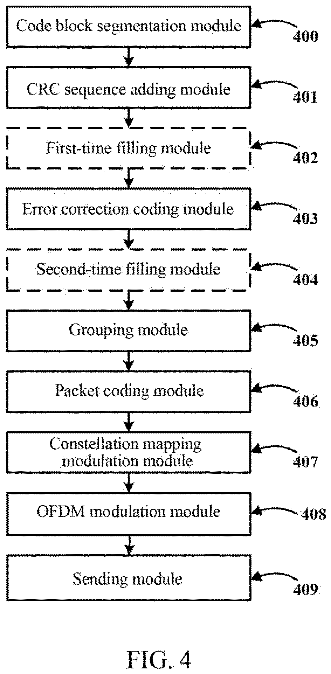

In an OFDMA communication system, a single OFDM symbol has 1024 subcarriers and the number of effective data subcarriers is 800. The present example is used for transmitting data from a first transmission node which is a mobile user 100 to a second transmission node which is a base station 101, as illustrated in FIG. 1. FIG. 4 illustrates a structural schematic diagram of components of a data packet processing apparatus in an OFDMA system according to embodiment two of the present invention. As illustrated in FIG. 4, the data packet processing apparatus in the OFDMA system according to an embodiment of the present invention includes a code block segmentation module 400, a CRC sequence adding module 401, an error correction coding module 403, a grouping module 405, a packet coding module 406, a constellation mapping modulation module 407, an OFDM modulation module 408 and a sending module 409.

The code block segmentation module 400 is configured to perform code block segmentation on a source data packet to be transmitted with a length of 1968 bits to obtain d=6 data blocks, herein a length of each data block is 328 bits.

The CRC sequence adding module 401 is configured to respectively add a CRC sequence with a length of h=8 bits to each data block, herein a length of each data block added with the CRC sequence becomes 336 bits, and since the length of each data block is the same and is equal to mother code input bits which are 336 bits, first-time filling is not needed.

The error correction coding module 403 is configured to respectively perform Turbo error correction coding on d=6 data blocks added with the CRC sequence, herein a code length of Turbo error correction coding is 672, a code rate is 1/2, and since 6 information data packets are exactly obtained through grouping, and each information data packet has 1 Turbo error correction code data block, second-time filling is not needed.

The grouping module 405 is configured to perform grouping to obtain $a$=6 information data packets with a same length, herein each information data packet has $1\times672$ bits and each information data packet has 1 Turbo error correction code block.

The packet coding module 406 is configured to perform packet coding on $a$=6 information data packets to obtain b=1 check data packet, herein a length of the check data packet is 672 bits and a single parity check coding method is used in the packet coding.

The constellation mapping modulation module 407 is configured to, by using a constellation mapping modulation mode which is QPSK and a modulation order which is 2, perform constellation mapping modulation on the $a$=6 information data packets to obtain a first modulation symbol sequence with a length of k1=2016 and perform constellation mapping modulation on the b=1 check data packet to obtain a second modulation symbol sequence with a length of k2=336; or perform constellation mapping modulation on the $a$=6 information data packets and the b=1 check data packet, herein modulation symbols including the $a$=6 information data packets form a first modulation symbol sequence with a length of k1=2016, and other modulation symbols form a second modulation symbol sequence with a length of k2=336.

The OFDM modulation module 408 is configured to map the first modulation symbol sequence to $M_{ofdm1}$=6 continuous OFDM symbols according to a time order, which includes: mapping the first modulation symbol sequence to (Nsc1=336)$\times$($M_{ofdm1}$=6) two-dimensional time-frequency resource according to an order of frequency first and then time, herein Nsc1=336 constellation mapping modulation symbols mapped to an ith OFDM symbol are sequentially mapped to Nsc1=336 non-reference signal subcarriers of the ith OFDM symbol, i=0, 1,..., 5; and mapping the second modulation symbol sequence to $M_{ofdm2}$=1 continuous OFDM symbol according to a time order, which includes: mapping the second modulation symbol sequence to (Nsc2=336)$\times$($M_{ofdm2}$=1) two-dimensional time-frequency resource according to an order of frequency first and then time, herein Nsc1=336 constellation mapping modulation symbols mapped to an ith OFDM symbol are sequentially mapped to Nsc1=336 non-reference signal subcarriers of the ith OFDM symbol, i=6, i is a sending order number and an OFDM symbol with a smaller sending order number is sent more early.

The sending module 409 is configured to enable a mobile user 100 to send the $M_{ofdm1}$=6 OFDM symbols and the $M_{ofdm2}$=1 OFDM symbols to a base station 101 according to sending order numbers.

Sending order numbers of all OFDM symbols and the mapping situation of two-dimensional time-frequency resource are as specifically illustrated in FIG. 5, the number of subcarriers configured by a system for the mobile user 100 transmitting data to the base station 101 is 336, data of the mobile user 502 are born on 7 OFDMA symbols, the first modulation symbol sequence 500 is born on the 0th to the 5th OFDM symbols and the second modulation symbol sequence 501 is born on the 6th OFDM symbol.

Example two

Differences of example two from example one lie in that each information data packet obtained through grouping in the grouping module 405 has $2\times672$ bits and a modulation mode used for the second modulation symbol sequence in the constellation mapping modulation module 407 is 16QAM, as described as follows.

In the grouping module 405, grouping is performed on data obtained after Turbo error correction coding is performed to obtain $a$=3 information data packets with a same length, herein each information data packet has $2\times672$ bits, each information data packet has 2 Turbo error correction code blocks; and in the packet coding module 406, a length of 1 check data packet obtained through packet coding is also $2\times672$ bits.

In the constellation mapping modulation module 407, a length of the first modulation symbol sequence is k1=2016 constellation mapping modulation symbols, a modulation order is Mod1'=2, a constellation mapping modulation mode is QPSK, a length of the first modulation symbol sequence is k2=336 constellation mapping modulation symbols, a modulation order is Mod2'=4 and a constellation mapping modulation mode is 16QAM; or the first modulation symbol sequence includes q1=2 modulation symbol subsequences, modulation orders in the subsequences are same, a length of a 0th modulation symbol subsequence is 1344, a used modulation mode is BPSK, a modulation order is 1, a length of a 1st modulation symbol subsequence is 672, a used modulation mode is 16QAM, a modulation order is 4, the second modulation symbol sequence includes q2=2 modulation symbol subsequences, a length of a 0th modulation symbol subsequence is 168, a used modulation mode is QPSK, a modulation order is 2, a length of a 1st modulation symbol subsequence is 168, a used modulation mode is 64QAM and a modulation order is 6.

Example three

Differences of example three from example one lie in that the packet coding method in the packet coding module 406 is a dual parity check coding method and a modulation mode used for the second modulation symbol sequence in the constellation mapping modulation module 407 is 16QAM, as described as follows.

In the packet coding module 406, packet coding is performed on $a=6$ information data packets to obtain $b=2$ check data packets, herein a length of the check data packet is 672 bits and the packet coding uses a dual parity check coding method as follow: a 0th check data packet P0 selects all 6 Turbo error correction code blocks to perform single parity check coding, i.e., P0=C0+C1+...+C5; and a 1st check data packet PI selects all even-number Turbo error correction code blocks to perform single parity check coding with P0, i.e., P0=C0+C2+C4+P0, herein C0-C5 are 6 Turbo error correction code blocks, thereby 2 check data blocks Po and P1 are obtained, and lengths are respectively 672 bits.

In the constellation mapping modulation module 407, constellation mapping modulation is performed on the $a=6$ information data packets to obtain a first modulation symbol sequence with a length of k1=2016, a constellation mapping modulation mode is QPSK and a modulation order is 2; and constellation mapping modulation is performed on the $b=2$ check data packets to obtain a second modulation symbol sequence with a length of k2=336, a constellation mapping modulation mode is 16QAM and a modulation order is 4.

Example four

A difference of example four from example one lies in the OFDM modulation module 408 as follow.

In the OFDM modulation module 408, mapping the first modulation symbol sequence to $M_{ofdm1}=6$ continuous OFDM symbols according to a time order, includes: mapping the first modulation symbol sequence to (Nsc1=336)$\times$($M_{ofdm1}=6$) two-dimensional time-frequency resource according to an order of frequency first and then time, herein Nsc1=336 constellation mapping modulation symbols mapped to an ith OFDM symbol are firstly interleaved and then are sequentially mapped to Nsc1=336 non-reference signal subcarriers of the ith OFDM symbol; or Nsc1=336 constellation mapping modulation symbols mapped to an ith OFDM symbol are mapped to Nsc1=336 non-reference signal subcarriers of the ith OFDM symbol according to a random mapping relation table; or Nsc1=336 constellation mapping modulation symbols mapped to an ith OFDM symbol are firstly sequentially mapped to a logical buffer memory, and then data in the logical buffer memory are mapped to Nsc1=336 non-reference signal subcarriers of the ith OFDM symbol according to a random mapping relation table, herein i=0, 1,..., 5.

In addition, mapping the second modulation symbol sequence to $M_{ofdm2}=1$ continuous OFDM symbol according to a time order, includes: mapping the second modulation symbol sequence to (Nsc2=336)$\times$($M_{ofdm2}=1$) two-dimensional time-frequency resource according to an order of frequency first and then time, herein Nsc2=336 constellation mapping modulation symbols mapped to an ith OFDM symbol are firstly interleaved and then are sequentially mapped to Nsc2=336 non-reference signal subcarriers of the ith OFDM symbol; or Nsc2=336 constellation mapping modulation symbols mapped to an ith OFDM symbol are mapped to Nsc2=336 non-reference signal subcarriers of the ith OFDM symbol according to a random mapping relation table; or Nsc2=336 constellation mapping modulation symbols mapped to an ith OFDM symbol are firstly sequentially mapped to a logical buffer memory, and then data in the logical buffer memory are mapped to Nsc2=336 non-reference signal subcarriers of the ith OFDM symbol according to a random mapping relation table, herein i=6.

Herein, i is a sending order number and an OFDM symbol with a smaller sending order number is sent more early. The interleaving method is row-row and col-column block interleaving of row-input column-output or random interleaving, and the random mapping relation table is an input-output relation table obtained through the row-row and col-column block interleaving of the row-input column-output or a random input-output relation table, herein row and col are both integers greater than 0, row=21 and col=16.

Example five

A difference of example five from example one lies in the OFDM modulation module 408 and the sending module 409 as follows.

In the OFDM modulation module 408, mapping the first modulation symbol sequence to $M_{ofdm1}=7$ continuous OFDM symbols according to a time order, includes: mapping the first modulation symbol sequence to (Nsc1=228)$\times$($M_{ofdm1}=7$) two-dimensional time-frequency resource according to an order of frequency first and then time, herein Nsc1=228 constellation mapping modulation symbols mapped to an ith OFDM symbol are sequentially mapped to Nsc1=228 non-reference signal subcarriers of the ith OFDM symbol, i=0, 1,..., 6; and mapping the second modulation symbol sequence to $M_{ofdm2}=7$ continuous OFDM symbol according to a time order, includes: mapping the second modulation symbol sequence to (Nsc2=48)$\times$($M_{ofdm2}=7$) two-dimensional time-frequency resource according to an order of frequency first and then time, herein Nsc2=48 constellation mapping modulation symbols mapped to an ith OFDM symbol are sequentially mapped to Nsc2=48 non-reference signal subcarriers of the ith OFDM symbol, i=7, 8,..., 13, herein i is a sending order number and an OFDM symbol with a smaller sending order number is sent more early.

In the sending module 409, a sending process is that: as illustrated in FIG. 6, after OFDM symbols including a first modulation symbol sequence 600 are completely sent, OFDM symbols including a second modulation symbol sequence 601 are directly sent; or as illustrated in FIG. 7, after OFDM symbols including a first modulation symbol sequence 700 are completely sent, OFDM symbols including a second modulation symbol sequence 701 are sent after waiting for 7 OFDM symbols.

Example six

In an OFDMA communication system, a single OFDM symbol has 1024 subcarriers and the number of effective data subcarriers is 800. The present example is used for transmitting data from a first transmission node which is a base station 101 to a second transmission node which is a mobile user 100, as illustrated in FIG. 1. As illustrated in FIG. 4, a data packet processing apparatus in an OFDMA system according to an embodiment of the present invention at least includes a code block segmentation module 400, a CRC sequence adding module 401, a first-time filling module 402, an error correction coding module 403, a second-time filling module 404, a grouping module 405, a packet coding module 406, a constellation mapping modulation module 407, an OFDM modulation module 408 and a sending module 409.

The code block segmentation module 400 is configured to perform code block segmentation on a source data packet to be transmitted with a length of 9620 bits to obtain d=20 data blocks, herein a length of each data block is 481 bits.

The CRC sequence adding module 401 is configured to respectively add a CRC sequence with a length of h=8 bits to each data block, herein a length of each data block added with the CRC sequence becomes 489 bits.

The first-time filling module 402 is configured to, after the CRC sequence is added, perform first-time filling on each data block, herein first-time filling is to fill $ml_i=15$ bits to an ith data block, and a filled bit is '0', i=0, 1,..., 19, such that the length of each data block reaches 504 bits.

The error correction coding module 403 is configured to respectively perform Turbo error correction coding to d=20 data blocks added with the CRC sequence to obtain a data block with the total number of bits being 13440, herein a code length of Turbo error correction coding is 672 and a code rate is 3/4.

The second-time filling module 404 is configured to perform second-time filling on total data blocks after Turbo error correction coding is performed, herein the second-time filling is to add m2=672 bits to a head or tail of an entire error correction code data block, and a filled bit is '0'.

The grouping module 405 is configured to perform grouping to obtain *a*=7 information data packets with a same length, herein each information data packet has 3×672 bits.

The packet coding module 406 is configured to perform packet coding on *a*=7 information data packets to obtain b=1 check data packet, herein a length of the check data packet is 3x672 bits and a single parity check coding method is used in the packet coding.

The constellation mapping modulation module 407 is configured to, by using a constellation mapping modulation mode which is 64QAM and a modulation order which is 6, perform constellation mapping modulation on the *a*=7 information data packets with the number of effective bits being 20×657 (as illustrated in FIG. 8, bits 800 of the first-time filling and bits 803 of the second-time filling are not included) to obtain a first modulation symbol sequence with a length of k1=2190, and perform constellation mapping modulation on the b=1 check data packet with the number of effective bits being 3×657 (as illustrated in FIG. 8, all other bits not including 7 bits subjected to parity check coding in the packet coding method belong to results 802 of first-time filled bits and second-time filled bits) to obtain a second modulation symbol sequence (which needs to be filled with 3 bits) with a length of k2=329.

The OFDM modulation module 408 is configured to map the first modulation symbol sequence and the second modulation symbol sequence to 360×7 two-dimensional time-frequency resource on 7 continuous OFDM symbols according to a time order, as illustrated in FIG. 9, herein 360 constellation mapping modulation symbols mapped to an ith OFDM symbol are sequentially mapped to 360 non-reference signal subcarriers of the ith OFDM symbol, i=0, 1,..., 6; and the first modulation symbol sequence is mapped to the 0th to the 6th OFDM symbols 900, and the second modulation symbol sequence is mapped to the 6th OFDM symbol 901 (a last subcarrier of the 6th OFDM symbol in the two-dimensional time-frequency resource is a filled symbol 902), i.e., in sending order numbers, a first OFDM symbol in the $M_{ofdm2}=1$ OFDM symbol to which the second modulation symbol sequence is mapped is a last OFDM symbol in the $M_{ofdm1}=7$ OFDM symbols to which the first modulation symbol sequence is mapped.

The sending module 409 is configured to enable a base station 101 to send the 7 OFDM symbols to a mobile user 100 according to sending order numbers.

Example seven

A difference of example seven from example six lies in the OFDM modulation module 408 as follow.

In the OFDM modulation module 408, the first modulation symbol sequence and the second modulation symbol sequence are mapped to two-dimensional time-frequency resource on $M_{ofdm1}=7$ continuous OFDM symbols according to a time order, herein d is the number of Turbo code blocks (d=20), c is the number of Turbo code blocks contained in each information data packet (c=3), b is the number of check data packets (b=1) and $M_{ofdm}$ is the total number of needed OFDM symbols ($M_{ofdm}=7$); according to a judgment condition that whether (d+bxc) is greater than $M_{ofdm}$, if it is judged that the condition is satisfied at this moment, 360 constellation mapping modulation symbols mapped to an ith OFDM symbol are interleaved firstly and then the constellation mapping modulation symbols are sequentially mapped to 360 non-reference signal subcarriers of the ith OFDM symbol; or 360 constellation mapping modulation symbols mapped to an ith OFDM symbol are mapped to 360 non-reference signal subcarriers of the ith OFDM symbol according to a random mapping relation table; or 360 constellation mapping modulation symbols mapped to an ith OFDM symbol are firstly sequentially mapped to a logical buffer memory, and then data in the logical buffer memory are mapped to 360 non-reference signal subcarriers of the ith OFDM symbol according to a random mapping relation table, herein i=0, 1, ...,6.

Herein, i is a sending order number and an OFDM symbol with a smaller sending order number is sent more early. The interleaving method is row-row and col-column block interleaving of row-input column-output or random interleaving, and the random mapping relation table is an input-output relation table obtained through the row-row and col-column block interleaving of the row-input column-output or a random input-output relation table, herein row and col are both integers greater than 0, row=20 and col=18.

Example eight

A difference of example eight from example six lies in the OFDM modulation module 408 as follow.

In the OFDM modulation module 408, mapping the first modulation symbol sequence to $M_{ofdm1}=6$ continuous OFDM symbols according to a time order includes: as illustrated in FIG. 10, mapping the first modulation symbol sequence to (Nsc1=365)$\times$($M_{ofdm1}=6$) two-dimensional time-frequency resource 1000 according to an order of frequency first and then time, herein d is the number of Turbo code blocks (d=20); and according to a judgment condition that whether d is greater than $M_{ofdm1}$, if it is judged that the condition is satisfied at this moment, Nsc1=365 constellation mapping modulation symbols mapped to an ith OFDM symbol are interleaved firstly and then the constellation mapping modulation symbols are sequentially mapped to Nsc1=365 non-reference signal subcarriers of the ith OFDM symbol; or Nsc1=365 constellation mapping modulation symbols mapped to an ith OFDM symbol are mapped to Nsc1=365 non-reference signal subcarriers of the ith OFDM symbol according to a random mapping relation table; or Nsc1=365 constellation mapping modulation symbols mapped to an ith OFDM symbol are firstly sequentially mapped to a logical buffer memory, and then data in the logical buffer memory are mapped to Nsc1=365 non-reference signal subcarriers of the ith OFDM symbol according to a random mapping relation table, herein i=0, 1, ..., 5.

In addition, mapping the second modulation symbol sequence to $M_{ofdm2}=6$ continuous OFDM symbols according to a time order includes: as illustrated in FIG. 10, mapping the second modulation symbol sequence to (Nsc2=55)$\times$($M_{ofdm2}=6$) two-dimensional time-frequency resource 1001 (the last subcarrier is a filled symbol) according to an order of frequency first and then time, herein b is the number of check data packets (b=1) and c is the number of Turbo code blocks contained in each information data packet (c=3); and according to a judgment condition that whether b$\times$c is greater than $M_{ofdm2}$, if it is judged that the condition is not satisfied at this moment, as illustrated in FIG. 10, Nsc2=55 constellation mapping modulation symbols mapped to an ith OFDM symbol are sequentially mapped to Nsc2=55 non-reference signal subcarriers of the ith OFDM symbol, herein i=6, 7, ..., 11.

Herein, i is a sending order number and an OFDM symbol with a smaller sending order number is sent more early. The interleaving method is row-row and col-column block interleaving of row-input column-output or random interleaving, and the random mapping relation table is an input-output relation table obtained through the row-row and col-column block interleaving of the row-input column-output or a random input-output relation table, herein row and col are both integers greater than 0, row=73 and col=5.

Example nine

Example nine is applicable to a receiving end (mobile user 100) in example six. As illustrated in FIG. 11, an apparatus at least includes an OFDM symbol receiving module 1300, an OFDM symbol demodulation module 1301, a constellation mapping demodulation module 1302, an error correction decoding module 1303, a CRC sequence removal module 1304, a data merging module 1305.

The OFDM symbol receiving module 1300 is configured to receive an ith OFDM symbol.

The OFDM symbol demodulation module 1301 is configured to demodulate the ith OFDM symbol, and obtain 360 constellation mapping modulation symbols born on the ith OFDM symbol according to a configuration of subcarrier resource configured by a system and used for transmitting to a mobile user 100.

The constellation mapping demodulation module 1302 is configured to demodulate the 360 constellation mapping modulation symbols into 360×6 soft bit information by using a modulation mode of 64QAM and a modulation order of 6.

The error correction decoding module 1303 is configured to decode all Turbo codes which belong to the ith OFDM symbol.

The CRC sequence removal module 1304 is configured to remove CRC sequences in all Turbo code blocks.

The data merging module 1305 is configured to merge all pure data obtained after CRC sequences are removed to obtain a source data packet sent by a first transmission node (base station 101).

As illustrated in FIG. 12, once an ith OFDM symbol is received, all error correction code blocks (Turbo code blocks) which belong to the ith OFDM symbol may be decoded, then error correction code blocks in an (i+1)th OFDM symbol are sequentially decoded, and thus by using a streamline-link mode, the decoding speed can be improved, herein i=0, 1, 2,..., 6.

Since 3 data blocks in the check data packet also belong to a Turbo code word space and can also be decoded, the number of Turbo code blocks is 23; after all Turbo code blocks are decoded, whether a code word is erroneous is judged according to a CRC sequence and/or Turbo code word space, if it is erroneous, soft bit information of a Turbo correction code block is saved, and if it is correct, a cumulative XOR result C of all correct Turbo code blocks is calculated, $C = C \oplus C_j$; according to a judgment condition that whether first 20 Turbo code blocks are correctly decoded or all 23 Turbo code blocks are correctly decoded, if the judgment condition is satisfied, the process is exited; if the judgment condition is not satisfied, through a packet decoding method, soft bit information of each erroneous Turbo code word is demodulated by using soft bit information of erroneous Turbo code blocks, a cumulative XOR result of correct Turbo code words and an XOR relation among all code blocks in packet coding, the erroneous Turbo code blocks are decoded, and then according to the judgment condition that whether first 20 Turbo code blocks are correctly decoded or all 23 Turbo code blocks are correctly decoded, if the judgment condition is satisfied , the process is exited; and if the judgment condition is not satisfied, the process is exited or iteration is continuously performed to perform packet decoding, herein a maximum number of iterations is 5.

Example ten

In an OFDMA communication system, a single OFDM symbol has 1024 subcarriers and the number of effective data subcarriers is 800. The present example is used for transmitting data from a first transmission node which is a base station 101 to a second transmission node which is a mobile user 100, as illustrated in FIG. 1, herein the number of OFDM symbols is $M_{ofdm}$=6, the number of subcarriers on each OFDM symbol allocated by a system and used for transmitting data from the first transmission node to the second transmission node is Nsc=512, a modulation order is Mu=4, an error correction code rate is R=1/2, the number of error correction code blocks in each information data packet is c=1, the number of error correction code blocks born on each OFDM symbol is k0=1, the number of bits of a CRC sequence is h=8 and the number of check data packets obtained through packet coding is b=1. An apparatus according to the present invention at least includes a code block segmentation module 400, a CRC sequence adding module 401, a first-time filling module 402, an error correction coding module 403, a second-time filling module 404, a grouping module 405, a packet coding module 406, a constellation mapping modulation module 407, an OFDM modulation module 408 and a sending module 409, as illustrated in FIG. 4.

The code block segmentation module 400 is configured to, according to the following parameters: a length L=5080 of a source data packet, the number of subcarriers Nsc=512 on each OFDM symbol allocated by a system and used for transmitting data from the first transmission node to the second transmission node, a modulation order Mu=4, an error correction code rate R=1/2, the number of OFDM symbols $M_{ofdm}$=6, the number of error correction code blocks c=1 in each information data packet, the number of error correction code blocks k0=1 born on each OFDM symbol, the number of bits h=8 of each CRC sequence and the number of check data packets b=1 obtained through packet coding, calculate and obtain the number of data blocks which is d=$M_{ofdm}$×k0-b×c=5, herein the size of each data block is L/d=1016, and perform code block segmentation on the source data packet to be transmitted with the length of L=5080 bits to obtain d=5 data blocks, herein a length of each data block is 1016 bits.

The CRC sequence adding module 401 is configured to respectively add a CRC sequence with a length of h=8 bits to each data block, herein a length of each data block added with the CRC sequence becomes 1024 bits.

The first-time filling module 402 is configured to, after the CRC sequence is added, perform first-time filling on each data block, herein the first-time filling is to fill mli=0 bits to an ith data block, and a filled bit is '0', i=0, 1,..., 4, such that the length of each data block reaches 1024 bits.

The error correction coding module 403 is configured to respectively perform Turbo error correction coding on d=5 data blocks added with the CRC sequence to obtain bits with the total number being 10240.

The second-time filling module 404 is configured to perform second-time filling after Turbo error correction coding is performed, herein the second-time filling is to add m2=0 bits to a head or tail of an entire error correction code data block, and a filled bit is '0'.

The grouping module 405 is configured to perform grouping to obtain $a$=5 information data packets with a same length, herein each information data packet has 2048 bits.

The packet coding module 406 is configured to perform packet coding on $a$=5 information data packets to obtain b=1 check data packet, herein a length of the check data packet is 2048 bits and a single parity check coding method is used in the packet coding.

The constellation mapping modulation module 407 is configured to, by using a constellation mapping modulation mode which is 64QAM and a modulation order which is 4, perform constellation mapping modulation on the $a$=5 information data packets with the number of effective bits being 10240 to obtain a first modulation symbol sequence with a length of k1=2560, and perform constellation mapping modulation on the b=1 check data packet with the number of effective bits being 2048 to obtain a second modulation symbol sequence with a length of k2=512.

The OFDM modulation module 408 is configured to map the first modulation symbol sequence and the second modulation symbol sequence to 512×6 two-dimensional time-frequency resource on 6 continuous OFDM symbols according to a time order, herein 512 constellation mapping modulation symbols mapped to an ith OFDM symbol are sequentially mapped to 512 non-reference signal subcarriers of the ith OFDM symbol, i=0, 1,..., 5; and herein the first modulation symbol sequence is mapped to the 0th to 4th OFDM symbols, and the second modulation symbol sequence is mapped to the 5th OFDM symbol, herein i is a sending order number of an OFDM symbol and an OFDM symbol with a smaller sending order number is sent more early.

The sending module 409 is configured to enable a base station 101 to send the 7 OFDM symbols to a mobile user 100 according to sending order numbers.

Example eleven

A difference of example eleven from example one and example ten lies in the error correction coding module 403, where the used error correction coding method is convolutional coding, LDPC coding, RS coding, Hamming coding, product coding or BCH coding.

An embodiment of the present invention further provides a storage medium storing a computer program, herein the computer program is configured to execute the data packet processing method in the OFDMA system according to each of the above-mentioned embodiments.

When the methods and apparatuses capable of improving transmission performance of data packets of a physical layer of a communication system according to the embodiments of the present invention are implemented in the forms of software function modules and are sold or used as independent products, these methods and apparatuses may also be stored in a computer-readable storage medium. Based on such understanding, one skilled in the art shall understand that the embodiments of the present application may be provided as methods, systems or computer program products. Therefore, the present application may adopt the forms of full hardware embodiments, full software embodiments or embodiments combining software and hardware. In addition, the present application may adopt the form of computer program products which are implemented on one or more computer-usable storage mediums including computer-usable program codes, and the storage mediums include but not limited to USB disks, mobile hard disks, Read-Only Memories (ROM), magnetic disk memories, CD-ROMs, optical memories and the like.

The present application is described according to flowcharts and/or block diagrams of the methods, apparatuses (systems) and computer program products of the embodiments of the present invention. It shall be understood that each flow and/or block in the flowcharts and/or block diagrams and combinations of flows and/or blocks in the flowcharts and/or block diagrams may be implemented by computer program instructions. These computer program instructions may be provided to a general-purpose computer, a dedicated computer, an embedded processor or other programmable data processing devices to produce a machine, such that instructions executed through a processor of a computer or other programmable data processing device produce an apparatus which is used for implementing functions designated in one or more flows of flowcharts and/or one or more blocks of block diagrams.

These computer program instructions may also be stored in a computer-readable memory which is capable of guiding computers or other programmable data processing devices to work in a specific manner, such that instructions stored in the computer-readable memory produce a product including an instruction device which implements functions designated in one or more flows of flowcharts and/or one or more blocks of block diagrams.

Theses computer program instructions may also be loaded on computers or other programmable data processing devices, such that a series of operation steps are executed on computers or other programmable data processing devices to perform processing implemented by computers, and thereby instructions executed on computers or other programmable data processing devices provide steps which are used for implementing functions designated in one or more flows of flowcharts and/or one or more blocks of block diagrams.

Industrial Applicability

In the present invention, all error correction code blocks are re-decoded through packet coding and decoding, thus the performance of each error correction code block is improved, and thereby the receiving robustness is improved.

**Claims**

1.  A data packet processing method in an Orthogonal Frequency Division Multiple Access, OFDMA, system, applied to a sending end, comprising:

    performing code block segmentation (300) on a source data packet to be transmitted to obtain d data blocks;
    respectively adding a Cyclic Redundancy Check, CRC, sequence (301) to each data block of the d data blocks;
    respectively performing error correction coding (303) on the d data blocks to each of which the respective CRC sequence has been added;
    **characterized in that** the method further comprises:

    grouping (305) the d data blocks on which the error correction coding has been performed to obtain $a$ information data packets with the same length;
    performing packet coding (306) on the $a$ information data packets to obtain b check data packets;
    performing constellation mapping modulation (307) on the $a$ information data packets and the b check data packets to obtain a first modulation symbol sequence with a length of k1 and a second modulation symbol sequence with a length of k2, wherein the first modulation symbol sequence corresponds to the $a$ information data packets and the second modulation symbol sequence corresponds to the b check data packets;
    mapping (308) the first modulation symbol sequence to $M_{ofdm1}$ continuous OFDM symbols according to a time order, and mapping the second modulation symbol sequence to $M_{ofdm2}$ continuous OFDM symbols according to a time order; and
    sending (308, 309) the $M_{ofdm1}$ OFDM symbols and the $M_{ofdm2}$ OFDM symbols, wherein the first OFDM symbol in the $M_{ofdm1}$ OFDM symbols is sent prior to the first OFDM symbol in the $M_{ofdm2}$ OFDM symbols;

    wherein $a$ is an integer greater than or equal to 2, d is an integer greater than or equal to 2, b is an integer greater than or equal to 1, k1 and k2 are both integers greater than or equal to 1, and $M_{ofdm1}$ and $M_{ofdm2}$ are both integers greater than or equal to 1.

2.  The method according to claim 1, wherein, when sending the $M_{ofdm1}$ OFDM symbols and the $M_{ofdm2}$ OFDM symbols, the first OFDM symbol in the $M_{ofdm2}$ OFDM symbols is sent later than or at the same time with the last OFDM symbol in the $M_{ofdm1}$ OFDM symbols.

3.  The method according to claim 2, wherein, after adding the CRC sequence to the d data blocks and before performing the error correction coding, the method further comprises:

    performing first-time filling (302) on the d data blocks added with the CRC sequence, wherein the first-time filling is to fill mli bits to an ith data block, wherein mli is an integer greater than or equal to 0, i=0, 1,..., d-1,
    and,
    after respectively performing the error correction on the d data blocks added with the CRC sequence and before grouping the d data blocks on which the error correction coding is performed, the method further comprises:

    performing second-time filling (304) on the d data blocks on which the error correction coding is performed, wherein the second-time filling is to add m2 bits to a head or tail of an entire error correction code data block, and wherein the entire error correction code data block comprises d error correction code blocks; and m2 is an integer greater than or equal to 0,
    and,
    wherein a number of bits of each information data packet in the $a$ information data packets with the same length is $k \times c$, wherein k is a number of bits of an error correction code block, k is an integer greater than or equal to 1 and c is an integer greater than or equal to 1,
    and,

    wherein performing constellation mapping modulation to the $a$ information data packets and the b check data packets comprises:

for the *a* information data packets on which the packet coding is performed, firstly removing bit data of the first-time filling and the second-time filling, and then performing the constellation mapping modulation; and for the b check data packets, firstly removing all bit data obtained through bit data of the first-time filling and the second-time filling on which the packet coding is performed, and then performing constellation mapping modulation;

wherein c is a number of error correction code blocks contained in each information data packet, c is an integer greater than or equal to 1.

4. The method according to claim 1, wherein a length of each data block in the d data blocks obtained through the code block segmentation depends on at least one of following parameters: a length of a source data packet, a number of subcarriers on each OFDM symbol allocated by system and used for transmitting data from a first transmission node to a second transmission node, a modulation order, an error correction code rate, a number of OFDM symbols, a number of error correction code blocks in an information data packet, a number of error correction code blocks born on each OFDM symbol, a number of bits of a CRC sequence and a number of check data packets obtained through packet coding.

5. The method according to claim 1, wherein a modulation order of the first modulation symbol sequence is Mod1' and a modulation order of the second modulation symbol sequence is Mod2', wherein Mod1' and Mod2' are integers from 1 to 16; or the first modulation symbol sequence comprises q1 modulation symbol subsequences, modulation orders in the subsequences are same, Modi is a modulation order used by an ith modulation symbol subsequence in the first modulation symbol sequence, Modi is an integer from 1 to 16, i=0, 1,..., (q1-1), the second modulation symbol sequence comprises q2 modulation symbol subsequences, modulation orders in the subsequences are same, Modj is a modulation order used by a jth modulation symbol subsequence in the second modulation symbol sequence, Modj is an integer from 1 to 16, and j=0, 1,..., (q2-1), wherein the modulation order is a number of bits carried by a constellation mapping modulation symbol, and q1 and q2 are both integers greater than or equal to 1.

6. The method according to claim 1, wherein performing packet coding on the *a* information data packets to obtain b check data packets comprises:

using ith bits in all the *a* information data packets to form a sequence Si with a length of *a* bits, and performing single parity check coding, b-multiple bit parity check coding, Hamming coding or Reed-Solumn, RS, coding on the Si to obtain a check sequence Ti with a length of b bits; and sequentially combining jth bits of all the check sequences Ti to obtain a check data packet Pj with a length of n bits;
wherein i=0, 1,..., n-1, n is a length of an error correction code block set, n is an integer greater than 1, j=0, 1,..., b-1, and b is an integer greater than or equal to 1.

7. The method according to claim 2, wherein mapping the first modulation symbol sequence to $M_{ofdm1}$ continuous OFDM symbols according to a time order comprises:

mapping the first modulation symbol sequence to a $Nsc1 \times M_{ofdm1}$ two-dimensional time-frequency resource according to an order of frequency first and then time, wherein frequency dimension is used for identifying index numbers of Nsc 1 continuous subcarriers in OFDM symbols and time dimension is used for identifying index numbers of $M_{ofdm1}$ continuous OFDM symbols; and Nsc1 is an integer greater than or equal to 1,
and,
wherein mapping the first modulation symbol sequence to a $Nsc1 \times M_{ofdm1}$ two-dimensional time-frequency resource according to an order of frequency first and then time comprises:
when d is greater than $M_{ofdm1}$, firstly interleaving constellation mapping modulation symbols of Nsc1 subcarriers mapped to an ith OFDM symbol and then sequentially mapping the constellation mapping modulation symbols to Nsc1 non-reference signal subcarriers of the ith OFDM symbol, or mapping constellation mapping modulation symbols of Nsc1 subcarriers mapped to an ith OFDM symbol to Nsc1 non-reference signal subcarriers of the ith OFDM symbol according to a random mapping relation table, or sequentially mapping constellation mapping modulation symbols of Nsc1 subcarriers mapped to an ith OFDM symbol to a logical buffer memory, and then mapping data in the logical buffer memory to Nsc1 non-reference signal subcarriers of the ith OFDM symbol according to a random mapping relation table;
when d is smaller than or equal to $M_{ofdm1}$, sequentially mapping constellation mapping modulation symbols of Nsc1 subcarriers mapped to an ith OFDM symbol to Nsc1 non-reference signal subcarriers of the ith OFDM symbol;
wherein i=0, 1,..., $M_{ofdm1}$-1.

8. The method according to claim 2, wherein mapping the second modulation symbol sequence to $M_{ofdm2}$ continuous OFDM symbols according to a time order comprises:

mapping the second modulation symbol sequence to a Nsc2$\times M_{ofdm2}$ two-dimensional time-frequency resource according to an order of frequency first and then time, wherein frequency dimension is used for identifying index numbers of Nsc2 continuous subcarriers in OFDM symbols and time dimension is used for identifying index numbers of $M_{ofdm2}$ continuous OFDM symbols; and Nsc2 is an integer greater than or equal to 1, and,
wherein mapping the second modulation symbol sequence to a Nsc2$\times M_{ofdm2}$ two-dimensional time-frequency resource according to an order of frequency first and then time comprises:

when (bxc) is greater than $M_{ofdm2}$, firstly interleaving constellation mapping modulation symbols of Nsc2 subcarriers mapped to an ith OFDM symbol, and then sequentially mapping the constellation mapping modulation symbols to Nsc2 non-reference signal subcarriers of the ith OFDM symbol, or mapping constellation mapping modulation symbols of Nsc2 subcarriers mapped to an ith OFDM symbol to Nsc2 non-reference signal subcarriers of the ith OFDM symbol according to a random mapping relation table, or sequentially mapping constellation mapping modulation symbols of Nsc2 subcarriers mapped to an ith OFDM symbol to a logical buffer memory, and then mapping data in the logical buffer memory to Nsc2 non-reference signal subcarriers of the ith OFDM symbol according to a random mapping relation table;
when (bxc) is smaller than or equal to $M_{ofdm2}$, sequentially mapping constellation mapping modulation symbols of Nsc2 subcarriers mapped to an ith OFDM symbol to Nsc2 non-reference signal subcarriers of the ith OFDM symbol,

wherein c is a number of error correction code blocks contained in each information data packet, c is an integer greater than or equal to 1, and i=0, 1,..., $M_{ofdm2}$-1.

9. A data packet processing apparatus in an Orthogonal Frequency Division Multiple Access, OFDMA, system, applied to a sending end, comprising:

a code block segmentation module (400) configured to perform code block segmentation on a source data packet to be transmitted to obtain d data blocks;
a CRC sequence adding module (401) configured to respectively add a Cyclic Redundancy Check CRC sequence to each data block of the d data blocks;
an error correction coding module (403) configured to respectively perform error correction coding on the d data blocks to each of which the respective CRC sequence has been added; **characterized in that** the apparatus further comprises:
a grouping module (405) configured to group the d data blocks on which the error correction coding has been performed to obtain *a* information data packets with the same length;
a packet coding module (406) configured to perform packet coding on the *a* information data packets to obtain b check data packets;
a constellation mapping modulation module (407) configured to perform constellation mapping modulation on the *a* information data packets and the b check data packets to obtain a first modulation symbol sequence with a length of k1 and a second modulation symbol sequence with a length of k2, wherein the first modulation symbol sequence corresponds to the *a* information data packets and the second modulation symbol sequence corresponds to the b check data packets;
an OFDM modulation module (408) configured to map the first modulation symbol sequence to $M_{ofdm1}$ continuous OFDM symbols according to a time order, and map the second modulation symbol sequence to $M_{ofdm2}$ continuous OFDM symbols according to a time order; and
a sending module (409) configured to send the $M_{ofdm1}$ OFDM symbols and the $M_{ofdm2}$ OFDM symbols, wherein the first OFDM symbol in the $M_{ofdm1}$ OFDM symbols is sent prior to the first OFDM symbol in the $M_{ofdm2}$ OFDM symbols;
wherein *a* is an integer greater than or equal to 2, d is an integer greater than or equal to 2, b is an integer greater than or equal to 1, k1 and k2 are both integers greater than or equal to 1, and $M_{ofdm1}$ and $M_{ofdm2}$ are both integers greater than or equal to 1.

10. The apparatus according to claim 9, wherein, when the sending module sends the $M_{ofdm1}$ OFDM symbols and the $M_{ofdm2}$ OFDM symbols, the first OFDM symbol in the $M_{ofdm2}$ OFDM symbols is sent later than or at the same time with the last OFDM symbol in the $M_{ofdm1}$ OFDM symbols.

11. The apparatus according to claim 10, wherein the apparatus further comprises:

a first-time filling (402) module configured to, after the CRC sequence adding module adds the CRC sequence to the d data blocks and before the error correction coding module performs the error correction coding, perform first-time filling on the d data blocks added with the CRC sequence, wherein the first-time filling is to fill mli bits to an ith data block, and mli is an integer greater than or equal to 0, i=0, 1,..., d-1,
and,
the apparatus further comprises:

a second-time filling module (404) configured to, after the error correction coding module respectively performs the error correction coding on the d data blocks added with the CRC sequence and before the grouping module groups the d data blocks on which the error correction coding is performed, perform second-time filling on the d data blocks on which the error correction coding is performed, wherein the second-time filling is to add m2 bits to a head or tail of an entire error correction code data block, the entire error correction code data block comprises d error correction code blocks; and m2 is an integer greater than or equal to 0,
and,
a number of bits of each information data packet in the a information data packets with the same length is kxc, wherein k is a number of bits of an error correction code block, k is an integer greater than or equal to 1 and c is an integer greater than or equal to 1,
and,

the constellation mapping modulation module is further configured to, for the a information data packets on which the packet coding is performed, firstly remove bit data of the first-time filling and the second-time filling, and then perform constellation mapping modulation; and
for the b check data packets, firstly remove all bit data obtained through bit data of the first-time filling and the second-time filling on which the packet coding is performed, and then perform constellation mapping modulation.

12. The apparatus according to claim 9, wherein a length of each data block in the d data blocks obtained through the code block segmentation performed by the code block segmentation module depends on at least one of following parameters: a length of a source data packet, a number of subcarriers on each OFDM symbol allocated by system and used for transmitting data from a first transmission node to a second transmission node, a modulation order, an error correction code rate, a number of OFDM symbols, a number of error correction code blocks in an information data packet, a number of error correction code blocks born on each OFDM symbol, a number of bits of CRC sequence and a number of check data packets obtained through packet coding, wherein the modulation order is a number of bits carried by a constellation mapping modulation symbol,
and,
a modulation order of the first modulation symbol sequence is Mod1' and a modulation order of the second modulation symbol sequence is Mod2', wherein Mod1' and Mod2' are integers from 1 to 16; or the first modulation symbol sequence comprises q1 modulation symbol subsequences, modulation orders in the subsequences are same, Modi is a modulation order used by an ith modulation symbol subsequence in the first modulation symbol sequence, Modi is an integer from 1 to 16, i=0, 1,..., (q1-1), the second modulation symbol sequence comprises q2 modulation symbol subsequences, modulation orders in the subsequences are same, Modj is a modulation order used by a jth modulation symbol subsequence in the second modulation symbol sequence, Modj is an integer from 1 to 16 and j=0, 1,..., (q2-1), wherein the modulation order is a number of bits carried by a constellation mapping modulation symbol, and q1 and q2 are both integers greater than or equal to 1.

13. A storage medium, storing instructions which, when executed by a computer, cause the computer to carry out the method of any one of claims 1-8.

**Patentansprüche**

1. Datenpaketverarbeitungsverfahren in einem Mehrfachzugangssystem für orthogonale Frequenzteilung, OFDMA-System, angewandt auf einer Senderseite, Folgendes umfassend:

Durchführen einer Codeblocksegmentierung (300) an einem Quelldatenpaket, das übertragen wird, um d Datenblöcke zu erhalten;

jeweiliges Hinzufügen einer zyklischen Redundanzprüfungssequenz (301), CRC-Sequenz, zu jedem Datenblock von den d Datenblöcken;

jeweiliges Durchführen einer Fehlerkorrekturcodierung (303) an den d Datenblöcken, von denen an jeden die entsprechende CRC-Sequenz hinzugefügt wurde;

**dadurch gekennzeichnet, dass** das Verfahren ferner Folgendes umfasst:

Gruppieren (305) der d Datenblöcke, an denen die Fehlerkorrekturcodierung durchgeführt wurde, um a Informationsdatenpakete derselben Länge zu erhalten;

Durchführen einer Paketcodierung (306) an den a Informationsdatenpaketen, um b Prüfungsdatenpakete zu erhalten;

Durchführen einer Konstellationsabbildungsmodulation (307) an den a Informationsdatenpaketen und den b Prüfungsdatenpaketen, um eine erste Modulationssymbolsequenz mit einer Länge von k1 und eine zweite Modulationssymbolsequenz mit einer Länge von k2 zu erhalten, wobei die erste Modulationssymbolsequenz mit den a Informationsdatenpaketen korrespondiert und die zweite Modulationssymbolsequenz mit den b Prüfungsdatenpaketen korrespondiert;

Abbilden (308) der ersten Modulationssymbolsequenz auf $M_{ofdm1}$ kontinuierliche OFDM-Symbole gemäß einer Zeitfolge und Abbilden der zweiten Modulationssymbolsequenz auf $M_{ofdm2}$ kontinuierliche OFDM-Symbole gemäß einer Zeitfolge; und

Senden (308, 309) der $M_{ofdm1}$ OFDM-Symbole und der $M_{ofdm2}$ OFDM-Symbole, wobei das erste OFDM-Symbol von den $M_{ofdm1}$ OFDM-Symbolen gesendet wird, bevor das erste OFDM-Symbol von den $M_{ofdm2}$ OFDM-Symbolen gesendet wird;

wobei a eine ganze Zahl ist, die größer oder gleich 2 ist, d eine ganze Zahl ist, die größer oder gleich 2 ist, b eine ganze Zahl ist, die größer oder gleich 1 ist, k1 und k2 beides ganze Zahlen sind, die größer oder gleich 1 sind, und $M_{ofdm1}$ und $M_{ofdm2}$ beides ganze Zahlen sind, die größer oder gleich 1 sind.

**2.** Verfahren nach Anspruch 1, wobei, wenn die $M_{ofdm1}$ OFDM-Symbole und die $M_{ofdm2}$ OFDM-Symbole gesendet werden, das erste OFDM-Symbol von den $M_{ofdm2}$ OFDM-Symbolen später oder zur selben Zeit wie das letzte OFDM-Symbol von den $M_{ofdm1}$ OFDM-Symbolen gesendet wird.

**3.** Verfahren nach Anspruch 2, wobei, nach dem Hinzufügen der CRC-Sequenz zu den d Datenblöcken und vor dem Durchführen der Fehlerkorrekturcodierung, das Verfahren ferner Folgendes umfasst:

Durchführen eines erstmaligen Füllens (302) an den d Datenblöcken, die mit der CRC-Sequenz hinzugefügt wurden, wobei das erstmalige Füllen dazu dient, mli Bits in einen ith-Datenblock zu füllen, wobei mli eine ganze Zahl ist, die größer oder gleich 0, i=0, 1,..., d-1 ist,
und,
nach dem jeweiligen Durchführen der Fehlerkorrektur an den d Datenblöcken, die mit der CRC-Sequenz hinzugefügt wurden, und vor dem Gruppieren der d Datenblöcke, an denen die Fehlerkorrekturcodierung durchgeführt wird, das Verfahren ferner Folgendes umfasst:

Durchführen eines zweitmaligen Füllens (304) an den d Datenblöcken, an denen die Fehlerkorrekturcodierung durchgeführt wird, wobei das zweitmalige Füllen bedeutet, dass m2 Bits an einen Beginn oder ein Ende eines vollständigen Fehlerkorrekturcode-Datenblocks hinzugefügt werden, und wobei der vollständige Fehlerkorrekturcode-Datenblock d Fehlerkorrekturcode-Blöcke umfasst; und m2 eine ganze Zahl ist, die größer oder gleich 0 ist,
und
wobei eine Anzahl von Bits jedes Informationsdatenpakets in den a Informationsdatenpaketen mit derselben Länge $k \times c$ ist, wobei k eine Anzahl von Bits eines Fehlerkorrekturcode-Blocks ist, k eine ganze Zahl ist, die größer oder gleich 1 ist, und c eine ganze Zahl ist, die größer oder gleich 1 ist,
und

wobei ein Durchführen einer Konstellationsabbildungsmodulation an den a Informationsdatenpaketen und den b Prüfungsdatenpaketen Folgendes umfasst:

für die a Informationsdatenpakete, an denen die Paketcodierung durchgeführt wird, erst ein Entfernen von Bit-Daten des erstmaligen Füllens und des zweitmaligen Füllens und daraufhin ein Durchführen der Konstellationsabbildungsmodulation; und

für die b Prüfungsdatenpakete, erst ein Entfernen aller Bit-Daten, die durch Bit-Daten des erstmaligen Füllens und des zweitmaligen Füllens erhalten wurden, an denen die Paketcodierung durchgeführt wurde, und daraufhin ein Durchführen der Konstellationsabbildungsmodulation;

wobei c eine Anzahl von Fehlerkorrekturcode-Blöcken ist, die in jedem Informationsdatenpaket enthalten sind, und c eine ganze Zahl ist, die größer oder gleich 1 ist.

4. Verfahren nach Anspruch 1, wobei eine Länge von jedem Datenblock der d Datenblöcke, die durch die Codeblocksegmentierung erhalten wurden, von mindestens einem der folgenden Parameter abhängig ist: einer Länge eines Quelldatenpakets, einer Anzahl von Unterträgern an jedem OFDM-Symbol, die von einem System alloziert und für ein Übertragen von Daten von einem ersten Übertragungsknoten zu einem zweiten Übertragungsknoten verwendet werden, einer Modulationsfolge, einer Fehlerkorrekturcode-Rate, einer Anzahl von OFDM-Symbolen, einer Anzahl von Fehlerkorrekturcode-Blöcken in einem Informationsdatenpaket, einer Anzahl von Fehlerkorrekturcode-Blöcken, die auf jedem OFDM-Symbol gehalten werden, einer Anzahl von Bits einer CRC-Sequenz und einer Anzahl von Prüfungsdatenpaketen, die durch eine Paketcodierung erhalten wurden.

5. Verfahren nach Anspruch 1, wobei eine Modulationsfolge der ersten Modulationssymbolsequenz Mod1' und eine Modulationsfolge der zweiten Modulationssymbolsequenz Mod2' ist, wobei Mod1' und Mod2' ganze Zahlen von 1 bis 16 sind; oder wobei die erste Modulationssymbolsequenz q1 Modulationssymboluntersequenzen umfasst, Modulationsfolgen in den Untersequenzen gleich sind, Modi eine Modulationsfolge ist, die in der ersten Modulationssymbolsequenz von einer ith-Modulationssymboluntersequenz verwendet wird, Modi eine ganze Zahl von 1 bis 16, i=0, 1,..., (q1-1) ist, die zweite Modulationssymbolsequenz q2 Modulationssymboluntersequenzen umfasst, Modulationsreihen in der Untersequenz gleich sind, Modj eine Modulationsfolge ist, die in der zweiten Modulationssymbolsequenz von einer jth-Modulationssymboluntersequenz verwendet wird, Modj eine ganze Zahl von 1 bis 16 und j=0, 1,..., (q2-1) ist, wobei die Modulationsfolge eine Anzahl von Bits ist, die von einem Konstellationsabbildungsmodulationssymbol getragen werden, und q1 und q2 beides ganze Zahlen sind, die größer oder gleich 1 sind.

6. Verfahren nach Anspruch 1, wobei ein Durchführen einer Paketcodierung an den a Informationsdatenpaketen, um b Prüfungsdatenpakete zu erhalten, Folgendes umfasst:

Verwenden von ith-Bits in allen a Informationsdatenpaketen, um eine Sequenz Si mit einer Länge von a Bits zu bilden, und Durchführen einer Einparitätsprüfungscodierung, einer Bitparitätsprüfungscodierung mit Mehrfachen von b, einer Hamming-Codierung oder Reed-Solumn-Codierung, RS-Codierung, an Si, um eine Prüfungssequenz Ti mit einer Länge von b Bits zu erhalten; und sequenzielles Kombinieren von jth-Bits von allen Prüfungssequenzen Ti, um ein Prüfungsdatenpaket Pj mit einer Länge von n Bits zu erhalten; wobei i=0, 1,..., n-1, n eine Länge einer Fehlerkorrekturcode-Blockgruppe ist, n eine ganze Zahl ist, die größer als 1, j=0, 1,..., b-1 ist, und b eine ganze Zahl ist, die größer oder gleich 1 ist.

7. Verfahren nach Anspruch 2, wobei ein Abbilden der ersten Modulationssymbolsequenz auf $M_{ofdm1}$ kontinuierlichen OFDM-Symbolen gemäß einer Zeitfolge Folgendes umfasst:

Abbilden der ersten Modulationssymbolsequenz auf einer Nscl x $M_{ofdm1}$ zweidimensionalen Zeit-Frequenz-Ressource gemäß einer Folge, in der Zeit auf Frequenz folgt, wobei eine Frequenzdimension verwendet wird, um Indexnummern von Nsc1 kontinuierlichen Unterträgern in OFDM-Symbolen zu identifizieren, und eine Zeitdimension verwendet wird, um Indexnummern von $M_{ofdm1}$ kontinuierlichen OFDM-Symbolen zu identifizieren; und Nsc1 eine ganze Zahl ist, die größer oder gleich 1 ist, und wobei ein Abbilden der ersten Modulationssymbolsequenz auf einer Nsc1 x $M_{ofdm1}$ zweidimensionalen Zeit-Frequenz-Ressource gemäß einer Folge, in der Zeit auf Frequenz folgt, Folgendes umfasst:

wenn d größer ist als $M_{ofdm1}$, zuerst ein Verschachteln der Konstellationsabbildungsmodulationssymbole von Nsc1 Unterträgern, die auf einem ith-OFDM-Symbol abgebildet sind, und daraufhin ein sequentielles Abbilden der Konstellationsabbildungsmodulationssymbole auf Nsc1 Nichtreferenzsignal-Unterträger des ith-OFDM-Symbols oder ein Abbilden von Konstellationsabbildungsmodulationssymbolen von Nsc1 Unterträgern, die auf einem ith-OFDM-Symbol abgebildet sind, auf Nsc1 Nichtreferenzsignal-Unterträger des ith-OFDM-Symbols gemäß einer Tabelle für zufällige Abbildungsverhältnisse, oder ein sequentielles Abbilden von Konstellationsabbildungsmodulationssymbolen von Nsc1 Unterträgern, die auf einem ith-OFDM-Symbol abgebildet sind, auf einen logischen Pufferspeicher, und daraufhin ein Abbilden der Daten in dem logischen Pufferspeicher auf Nsc1 Nichtreferenzsignal-Unterträger des ith-OFDM-Symbols gemäß einer Tabelle für zufällige Abbildungsverhältnisse;

wenn d kleiner oder gleich $M_{ofdm1}$ ist, ein sequentielles Abbilden von Konstellationsabbildungsmodulationssymbolen von Nsc1 Unterträgern, die auf einem ith-OFDM-Symbol abgebildet sind, auf Nsc1 Nichtreferenzsignal-Unterträger des ith-OFDM-Symbols;

wobei i=0, 1,..., $M_{ofdm1}$-1.

8. Verfahren nach Anspruch 2, wobei ein Abbilden der zweiten Modulationssymbolsequenz auf $M_{ofdm2}$ kontinuierliche OFDM-Symbole gemäß einer Zeitfolge Folgendes umfasst:

Abbilden der zweiten Modulationssymbolsequenz auf einer Nsc2 x $M_{ofdm2}$ zweidimensionalen Zeit-Frequenz-Ressource gemäß einer Folge, in der Zeit auf Frequenz folgt, wobei eine Frequenzdimension verwendet wird, um Indexnummern von Nsc2 kontinuierlichen Unterträgern in OFDM-Symbolen zu identifizieren, und eine Zeitdimension verwendet wird, um Indexnummern von $M_{ofdm2}$ kontinuierlichen OFDM-Symbolen zu identifizieren; und wobei Nsc2 eine ganze Zahl ist, die größer oder gleich 1 ist, und

wobei ein Abbilden der zweiten Modulationssymbolsequenz auf einer Nsc2 x $M_{ofdm2}$ zweidimensionalen Zeit-Frequenz-Ressource gemäß einer Folge, in der Frequenz auf Zeit folgt, Folgendes umfasst:

wenn (b x c) größer ist als $M_{ofdm2}$, erst ein Verschachteln von Konstellationsabbildungsmodulationssymbolen von Nsc2 Unterträgern, die auf einem ith-OFDM-Symbol abgebildet sind, und daraufhin ein sequentielles Abbilden der Konstellationsabbildungsmodulationssymbole auf Nsc2 Nichtreferenzsignal-Unterträger des ith-OFDM-Symbols, oder ein Abbilden von Konstellationsabbildungsmodulationssymbolen von Nsc2 Unterträgern, die auf einem ith-OFDM-Symbol abgebildet sind, auf Nsc2 Nichtreferenzsignal-Unterträger des ith-OFDM-Symbols gemäß einer Tabelle für zufällige Abbildungsverhältnisse, oder ein sequentielles Abbilden von Konstellationsabbildungsmodulationssymbolen von Nsc2 Unterträgern, die auf einem ith-OFDM-Symbol abgebildet sind, auf einem logischen Pufferspeicher und daraufhin ein Abbilden von Daten in dem logischen Pufferspeicher auf Nsc2 Nichtreferenzsignal-Unterträger des ith-OFDM-Symbols gemäß einer Tabelle für zufällige Abbildungsverhältnisse;

wenn (b x c) kleiner oder gleich $M_{ofdm2}$ ist, ein sequentielles Abbilden von Konstellationsabbildungsmodulationssymbolen von Nsc2 Unterträgern, die auf einem ith-OFDM-Symbol abgebildet sind, auf Nsc2 Nichtreferenzsignal-Unterträger des ith-OFDM-Symbols,

wobei c eine Anzahl von Fehlerkorrekturcode-Blöcken ist, die in jedem Informationsdatenpaket enthalten sind, und c eine ganze Zahl ist, die größer oder gleich 1 und i=0, 1,..., $M_{ofdm2}$-1 ist.

9. Datenpaketverarbeitungsvorrichtung in einem Mehrfachzugangssystem für orthogonale Frequenzteilung, OFDMA-System, angewandt auf einer Senderseite, Folgendes umfassend:

ein Codeblocksegmentierungsmodul (400), das dazu konfiguriert ist, eine Codeblocksegmentierung an einem Quelldatenpaket durchzuführen, das übertragen wird, um d Datenblöcke zu erhalten;
ein Modul (401) zum Hinzufügen von CRC-Sequenzen, das dazu konfiguriert ist, jedem Datenblock von den d Datenblöcken jeweils eine zyklische Redundanzprüfungssequenz, CRC-Sequenz, hinzuzufügen;
ein Fehlerkorrekturcodierungsmodul (403), das dazu konfiguriert ist, jeweils eine Fehlerkorrekturcodierung an den d Datenblöcken durchzuführen, von denen jedem eine jeweilige CRC-Sequenz hinzugefügt wurde;
**dadurch gekennzeichnet, dass** die Vorrichtung ferner Folgendes umfasst:

ein Gruppierungsmodul (405), das dazu konfiguriert ist, die d Datenblöcke, an denen die Fehlerkorrekturcodierung durchgeführt wurde, zu gruppieren, um a Informationsdatenpakete mit derselben Länge zu erhalten;
ein Paketcodierungsmodul (406), das dazu konfiguriert ist, eine Paketcodierung an den a Informationsdatenpaketen durchzuführen, um b Prüfungsdatenpakete zu erhalten;
ein Konstellationsabbildungsmodul (407), das dazu konfiguriert ist, eine Konstellationsabbildungsmodulation an den a Informationsdatenpaketen und den b Prüfungsdatenpaketen durchzuführen, um eine erste Modulationssymbolsequenz mit einer Länge von k1 und eine zweite Modulationssymbolsequenz mit einer Länge von k2 zu erhalten, wobei die erste Modulationssymbolsequenz mit den a Informationsdatenpaketen korrespondiert und die zweite Modulationssymbolsequenz mit den b Prüfungsdatenpaketen korrespondiert; ein OFDM-Modulationsmodul (408), das dazu konfiguriert ist, die erste Modulationssymbolsequenz auf $M_{ofdm1}$ kontinuierlichen OFDM-Symbolen gemäß einer Zeitfolge abzubilden und die zweite Modulationssymbolsequenz auf $M_{ofdm2}$ kontinuierlichen OFDM-Symbolen gemäß einer Zeitfolge abzubilden; und ein Sendemodul (409), das dazu konfiguriert ist, die $M_{ofdm1}$ OFDM-Symbole und die $M_{ofdm2}$ OFDM-Symbole zu senden, wobei das erste OFDM-Symbol von den $M_{ofdm1}$ OFDM-Symbolen gesendet wird, bevor das erste OFDM-Symbol von den $M_{ofdm2}$ OFDM-Symbolen gesendet wird;

wobei a eine ganze Zahl ist, die größer oder gleich 2 ist, d eine ganze Zahl ist, die größer oder gleich 2 ist, b eine ganze Zahl ist, die größer oder gleich 1 ist, k1 und k2 beides ganze Zahlen sind, die größer oder gleich 1 sind, und $M_{ofdm1}$ und $M_{ofdm2}$ beides ganze Zahlen sind, die größer oder gleich 1 sind.

10. Vorrichtung nach Anspruch 9, wobei, wenn das Sendemodul die $M_{ofdm1}$ OFDM-Symbole und die $M_{ofdm2}$ OFDM-Symbole sendet, das erste OFDM-Symbol von den $M_{ofdm2}$ OFDM-Symbolen später oder zur selben Zeit gesendet wird, wie das letzte OFDM-Symbol von den $M_{ofdm1}$ OFDM-Symbolen.

11. Vorrichtung nach Anspruch 10, wobei die Vorrichtung ferner Folgendes umfasst:

ein Modul (402) zum erstmaligen Füllen, das dazu konfiguriert ist, nachdem das Modul zum Hinzufügen von CRC-Sequenzen die CRC-Sequenzen zu den d Datenblöcken hinzugefügt hat und bevor das Fehlerkorrekturcodierungsmodul die Fehlerkorrekturcodierung durchführt, ein erstmaliges Füllen an den d Datenblöcken durchzuführen, die mit der CRC-Sequenz hinzugefügt wurden, wobei das erstmalige Füllen dazu dient, einen ith- Datenblock mit mli Bits zu füllen, wobei mli eine ganze Zahl ist, die größer oder gleich 0, i=0, 1,..., d-1 ist, und
die Vorrichtung ferner Folgendes umfasst:

ein Modul (404) zum zweitmaligen Füllen, das dazu konfiguriert ist, nachdem das Fehlerkorrekturcodierungsmodul jeweils die Fehlerkorrekturcodierung an den d Datenblöcken durchgeführt hat, die mit der CRC- Sequenz hinzugefügt wurden, und bevor das Gruppierungsmodul die d Datenblöcke gruppiert, an denen die Fehlerkorrekturcodierung durchgeführt wird, ein zweitmaliges Füllen an den d Datenblöcken durchzuführen, an denen die Fehlerkorrekturcodierung durchgeführt wird, wobei das zweitmalige Füllen dazu dient, m2 Bits an einen Beginn oder ein Ende eines vollständigen Fehlerkorrekturcode-Datenblocks hinzuzufügen, wobei der vollständige Fehlerkorrekturcode-Datenblock d Fehlerkorrekturcode-Blöcke umfasst; und wobei m2 eine ganze Zahl ist, die größer oder gleich 0 ist, und
eine Anzahl von Bits von jedem Informationsdatenpaket von den a Informationsdatenpaketen mit derselben Länge $k \times c$ ist, wobei k eine Anzahl von Bits eines Fehlerkorrekturcode-Blocks ist, k eine ganze Zahl ist, die größer oder gleich 1 ist, und c eine ganze Zahl ist, die größer oder gleich 1 ist, und

das Konstellationsabbildungsmodulationsmodul ferner dazu konfiguriert ist, für die a Informationsdatenpakete, an denen die Paketcodierung durchgeführt wird, erst Bitdaten des erstmaligen Füllens und des zweitmaligen Füllens zu entfernen und daraufhin eine Konstellationsabbildungsmodulation durchzuführen; und für die b Prüfungsdatenpakete, erst ein Entfernen aller Bitdaten, die durch Bitdaten des erstmaligen Füllens und des zweitmaligen Füllens, an denen die Paketcodierung durchgeführt wird, erhalten wurden, und daraufhin ein Durchführen einer Konstellationsabbildungsmodulation.

12. Vorrichtung nach Anspruch 9, wobei eine Länge von jedem Datenblock von den d Datenblöcken, die durch die Codeblocksegmentierung erhalten wurden, die durch das Codeblocksegmentierungsmodul durchgeführt wird, von mindestens einem der folgenden Parameter abhängig ist: einer Länge eines Quelldatenpakets, einer Anzahl von Unterträgern auf jedem OFDM-Symbol, das durch ein System alloziert ist und zum Übertragen von Daten von einem ersten Übertragungsknoten an einen zweiten Übertragungsknoten verwendet wird, einer Modulationsfolge, einer Fehlerkorrekturrate, einer Anzahl von OFDM-Symbolen, einer Anzahl von Fehlerkorrekturcode-Blöcken in einem Informationsdatenpaket, einer Anzahl von Fehlerkorrekturcode-Blöcken, die auf jedem OFDM-Symbol gehalten werden, einer Anzahl von Bits einer CRC-Sequenz und einer Anzahl von Prüfungsdatenpaketen, die durch eine Paketcodierung erhalten werden, wobei die Modulationsfolge eine Anzahl von Bits ist, die durch ein Konstellationsabbildungsmodulationssymbol getragen werden,
und

eine Modulationsfolge der ersten Modulationssymbolsequenz Mod1' ist und eine Modulationsfolge der zweiten Modulationssymbolsequenz Mod2' ist, wobei Mod1' und Mod2' ganze Zahlen von 1 bis 16 sind; oder die erste Modulationssymbolsequenz q1 Modulationssymboluntersequenzen umfasst, Modulationsfolgen in den Untersequenzen gleich sind, Modi eine Modulationsfolge ist, die von einer ith-Modulationssymboluntersequenz in der ersten Modulationssymbolsequenz verwendet wird, Modi eine ganze Zahl von 1 bis 16, i=0, 1,..., (q1-1) ist, die zweite Modulationssymbolsequenz q2 Modulationssymboluntersequenzen umfasst, Modulationsfolgen in den Untersequenzen gleich sind, Modj eine Modulationsfolge ist, die von einer jth-Modulationssymboluntersequenz in der zweiten Modulationssymbolsequenz verwendet wird, Modj eine ganze Zahl von 1 bis 16 und j=0, 1,..., (q2-1) ist, wobei die Modulationsfolge eine Anzahl von Bits ist, die von einem Konstellationsabbildungsmodulationssymbol getragen werden, und q1 und q2 beides ganze Zahlen sind, die größer oder gleich 1 sind.

13. Speichermedium, das Anweisungen speichert, die, wenn sie von einem Computer ausgeführt werden, bewirken, dass der Computer das Verfahren nach einem der Ansprüche 1-8 ausführt.

## Revendications

1. Procédé de traitement de paquet de données dans un système à accès multiple par répartition orthogonale de la fréquence, OFDMA, appliqué à une extrémité d'envoi, comprenant :

la réalisation d'une segmentation de bloc de code (300) sur un paquet de données source à transmettre pour obtenir d blocs de données ;
l'ajout respectif d'une séquence de vérification de redondance cyclique, CRC (301) à chaque bloc de données des d blocs de données ;
la réalisation respective d'un codage de correction d'erreur (303) sur les d blocs de données à chacun desquels la séquence CRC respective a été ajoutée ;
**caractérisé en ce que** le procédé comprend en outre :

le regroupement (305) des d blocs de données sur lesquels le codage de correction d'erreur a été réalisé pour obtenir a paquets de données d'informations ayant la même longueur ;
la réalisation d'un codage de paquet (306) sur les *a* paquets de données d'informations pour obtenir b paquets de données de vérification ;
la réalisation d'une modulation de mappage de constellation (307) sur les a paquets de données d'informations et les b paquets de données de vérification pour obtenir une première séquence de symboles de modulation ayant une longueur de k1 et une seconde séquence de symboles de modulation ayant une longueur de k2, dans lequel la première séquence de symboles de modulation correspond aux a paquets de données d'informations et la seconde séquence de symboles de modulation correspond aux b paquets de données de vérification ;
le mappage (308) de la première séquence de symboles de modulation sur $M_{ofdm1}$ symboles OFDM continus selon un ordre temporel, et le mappage de la seconde séquence de symboles de modulation sur $M_{ofdm2}$ symboles OFDM continus selon un ordre temporel ; et
l'envoi (308, 309) des $M_{ofdm1}$ symboles OFDM et des $M_{ofdm2}$ symboles OFDM, dans lequel le premier symbole OFDM dans les $M_{ofdm1}$ symboles OFDM est envoyé avant le premier symbole OFDM dans les $M_{ofdm2}$ symboles OFDM ;

dans lequel a est un nombre entier supérieur ou égal à 2, d est un nombre entier supérieur ou égal à 2, b est un nombre entier supérieur ou égal à 1, k1 et k2 sont tous deux des nombres entiers supérieurs ou égaux à 1, et $M_{ofdm1}$ et $M_{ofdm2}$ sont tous deux des nombres entiers supérieurs ou égaux à 1.

2. Procédé selon la revendication 1, dans lequel, lors de l'envoi des $M_{ofdm1}$ symboles OFDM et des $M_{ofdm2}$ symboles OFDM, le premier symbole OFDM dans les $M_{ofdm2}$ symboles OFDM est envoyé après ou en même temps que le dernier symbole OFDM dans les $M_{ofdm1}$ symboles OFDM.

3. Procédé selon la revendication 2, dans lequel, après l'ajout de la séquence CRC aux d blocs de données et avant la réalisation du codage de correction d'erreur, le procédé comprend en outre :

la réalisation d'un premier remplissage (302) sur les d blocs de données ajoutés à la séquence CRC, dans lequel le premier remplissage consiste à remplir mli bits dans un $i^{\text{ème}}$ bloc de données, dans lequel mli est un nombre entier supérieur ou égal à 0, i = 0, 1, ..., d-1,
et,

après la réalisation respective de la correction d'erreur sur les d blocs de données ajoutés à la séquence CRC et avant de regrouper les d blocs de données sur lesquels le codage de correction d'erreur est réalisé, le procédé comprend en outre :

la réalisation d'un second remplissage (304) sur les d blocs de données sur lesquels le codage de correction d'erreur est réalisé, dans lequel le second remplissage consiste à ajouter m2 bits à une tête ou à une queue d'un bloc entier de données de code de correction d'erreur, et dans lequel le bloc entier de données de code de correction d'erreur comprend d blocs de code de correction d'erreur ; et m2 est un nombre entier supérieur ou égal à 0,
et,

dans lequel un nombre de bits de chaque paquet de données d'informations dans les a paquets de données d'informations ayant la même longueur est k x c, dans lequel k est un nombre de bits d'un bloc de code de correction d'erreur, k est un nombre entier supérieur ou égal à 1 et c est un nombre entier supérieur ou égal à 1,
et,

dans lequel la réalisation d'une modulation de mappage de constellation sur les a paquets de données d'informations et les b paquets de données de vérification b comprend :

pour les a paquets de données d'informations sur lesquels le codage de paquet est réalisé, tout d'abord le retrait des données de bit du premier remplissage et du second remplissage, puis la réalisation de la modulation de mappage de constellation ; et
pour les b paquets de données de vérification, tout d'abord le retrait de toutes les données de bit obtenues par les données de bit du premier remplissage et du second remplissage sur lequel le codage de paquet est réalisé, puis la réalisation de la modulation de mappage de constellation ;

dans lequel c est un nombre de blocs de code de correction d'erreur contenus dans chaque paquet de données d'informations, c est un nombre entier supérieur ou égal à 1.

4. Procédé selon la revendication 1, dans lequel une longueur de chaque bloc de données dans les d blocs de données obtenus par la segmentation de bloc de code dépend d'au moins l'un des paramètres suivants : une longueur d'un paquet de données source, un nombre de sous-porteuses sur chaque symbole OFDM alloué par le système et utilisé pour transmettre des données d'un premier nœud de transmission à un second nœud de transmission, un ordre de modulation, un taux de code de correction d'erreur, un nombre de symboles OFDM, un nombre de blocs de code de correction d'erreur dans un paquet de données d'informations, un nombre de blocs de code de correction d'erreur nés sur chaque symbole OFDM, un nombre de bits d'une séquence CRC et un nombre de paquets de données de vérification obtenus par codage de paquet.

5. Procédé selon la revendication 1, dans lequel un ordre de modulation de la première séquence de symboles de modulation est Mod1' et un ordre de modulation de la seconde séquence de symboles de modulation est Mod2', dans lequel Mod1' et Mod2' sont des nombres entiers de 1 à 16 ; ou la première séquence de symboles de modulation comprend q1 sous-séquences de symboles de modulation, les ordres de modulation dans les sous-séquences sont les mêmes, Modi est un ordre de modulation utilisé par une $i^{\text{ème}}$ sous-séquence de symboles de modulation dans la première séquence de symboles de modulation, Modi est un nombre entier de 1 à 16, i = 0, 1, ..., (ql-1), la seconde séquence de symboles de modulation comprend q2 sous-séquences de symboles de modulation, les ordres de modulation dans les sous-séquences sont les mêmes, Modj est un ordre de modulation utilisé par une $j^{\text{ème}}$ sous-séquence de symboles de modulation dans la seconde séquence de symboles de modulation, Modj est un nombre entier de 1 à 16, et j = 0, 1, ..., (q2-1), dans lequel l'ordre de modulation est un nombre de bits portés par un symbole de modulation de mappage de constellation, et q1 et q2 sont les deux nombres entiers supérieurs ou égaux à 1.

6. Procédé selon la revendication 1, dans lequel la réalisation d'un codage de paquet sur les a paquets de données d'informations pour obtenir b paquets de données de vérification comprend :

l'utilisation des $i^{\text{ème}}$ bits dans tous les a paquets de données d'informations pour former une séquence Si avec une longueur de a bits, et la réalisation d'un codage de vérification de parité unique, d'un codage de vérification de parité de bits multiple de b, d'un codage de Hamming ou un codage de Reed-Solumn, RS, sur le Si pour obtenir une séquence de vérification Ti d'une longueur de b its ; et la combinaison séquentielle des jèmes bits de toutes les séquences de vérification Ti pour obtenir un paquet de données de vérification Pj ayant une longueur de n bits ;

dans lequel i = 0, 1, ..., n-1, n est une longueur d'un ensemble de blocs de codes de correction d'erreur, n est un nombre entier supérieur à 1, j = 0, 1, ..., b-1, et b est un nombre entier supérieur ou égal à 1.

**7.** Procédé selon la revendication 2, dans lequel le mappage de la première séquence de symboles de modulation sur $M_{ofdm1}$ symboles OFDM continus selon un ordre temporel comprend :

le mappage de la première séquence de symboles de modulation à une ressource temps-fréquence bidimensionnelle Nsc1 x $M_{ofdm1}$ selon un ordre de fréquence d'abord, puis de temps ensuite, dans lequel la dimension de fréquence est utilisée pour identifier les nombres d'index de Nsc1 sous-porteuses continues dans les symboles OFDM et la dimension de temps est utilisée pour identifier les numéros d'index de $M_{ofdm1}$ symboles OFDM continus ; et Nsc1 est un nombre entier supérieur ou égal à 1, et,

dans lequel le mappage de la première séquence de symboles de modulation à une ressource temps-fréquence bidimensionnelle Nsc1 x $M_{ofdm1}$ selon un ordre de fréquence d'abord, puis de temps ensuite, comprend :

lorsque d est supérieur à $M_{ofdm1}$, d'abord l'entrelacement des symboles de modulation de mappage de constellation de sous-porteuses Nsc1 mappés sur un $i^{ème}$ symbole OFDM, puis le mappage séquentiel des symboles de modulation de mappage de constellation sur les sous-porteuses de signal de non-référence Nsc1 du $i^{ème}$ symbole OFDM, ou le mappage des symboles de modulation de mappage de constellation de Nsc1 sous-porteuses mappées sur un $i^{ème}$ symbole OFDM sur Nsc1 sous-porteuses de signal de non-référence du $i^{ème}$ symbole OFDM selon une table de relation de mappage aléatoire, ou le mappage séquentiel des symboles de modulation de mappage de constellation de Nsc1 sous-porteuses mappées sur un $i^{ème}$ symbole OFDM dans une mémoire tampon logique, et puis le mappage de données dans la mémoire tampon logique à Nsc1 sous-porteuses de signal de non-référence du $i^{ème}$ symbole OFDM selon une table de relation de mappage aléatoire ;
lorsque d est inférieur ou égal à $M_{ofdm1}$, le mappage séquentiel de symboles de modulation de mappage de constellation de Nsc1 sous-porteuses mappées sur un $i^{ème}$ symbole OFDM sur Nsc1 sous-porteuses de signal de non-référence du $i^{ème}$ symbole OFDM ;

dans lequel i = 0, 1, ..., $M_{ofdm1}$-1.

**8.** Procédé selon la revendication 2, dans lequel le mappage de la seconde séquence de symboles de modulation sur $M_{ofdm2}$ symboles OFDM continus selon un ordre temporel comprend :

le mappage de la seconde séquence de symboles de modulation à une ressource temps-fréquence bidimensionnelle Nsc2 x $M_{ofdm2}$ selon un ordre de fréquence d'abord, puis de temps ensuite, dans lequel la dimension de fréquence est utilisée pour identifier les nombres d'index de Nsc2 sous-porteuses continues dans les symboles OFDM et la dimension de temps est utilisée pour identifier les numéros d'index de $M_{ofdm2}$ symboles OFDM continus ; et Nsc2 est un nombre entier supérieur ou égal à 1, et,

dans lequel le mappage de la seconde séquence de symboles de modulation à une ressource temps-fréquence bidimensionnelle Nsc2 x $M_{ofdm2}$ selon un ordre de fréquence d'abord, puis de temps ensuite, comprend :

lorsque (b x c) est supérieur à $M_{ofdm2}$, d'abord l'entrelacement des symboles de modulation de mappage de constellation de Nsc2 sous-porteuses mappées sur un $i^{ème}$ symbole OFDM, puis le mappage séquentiel des symboles de modulation de mappage de constellation sur les sous-porteuses de signal de non-référence Nsc2 du $i^{ème}$ symbole OFDM, ou le mappage des symboles de modulation de mappage de constellation de Nsc2 sous-porteuses mappées sur un $i^{ème}$ symbole OFDM sur Nsc2 sous-porteuses de signal de non-référence du $i^{ème}$ symbole OFDM selon une table de relation de mappage aléatoire, ou le mappage séquentiel des symboles de modulation de mappage de constellation de Nsc2 sous-porteuses mappées sur un $i^{ème}$ symbole OFDM dans une mémoire tampon logique, et puis le mappage de données dans la mémoire tampon logique à Nsc2 sous-porteuses de signal de non-référence du $i^{ème}$ symbole OFDM selon une table de relation de mappage aléatoire ;

lorsque (b x c) est inférieur ou égal à $M_{ofdm2}$, le mappage séquentiel de symboles de modulation de mappage de constellation de Nsc2 sous-porteuses mappées sur un $i^{ème}$ symbole OFDM sur Nsc2 sous-porteuses de signal de non-référence du $i^{ème}$ symbole OFDM,

dans lequel c est un nombre de blocs de code de correction d'erreur contenus dans chaque paquet de données d'informations, c est un nombre entier supérieur ou égal à 1, et i = 0, 1,..., $M_{ofdm2}$-1.

**9.** Appareil de traitement de paquet de données dans un système à accès multiple par répartition orthogonale de la fréquence, OFDMA, appliqué à une extrémité d'envoi, comprenant :

un module de segmentation de bloc de code (400) configuré pour réaliser une segmentation de bloc de code sur un paquet de données source à transmettre pour obtenir d blocs de données ;
un module d'ajout de séquence CRC (401) configuré pour ajouter respectivement une séquence CRC de vérification de redondance cyclique à chaque bloc de données des d blocs de données ;
un module de codage de correction d'erreur (403) configuré pour réaliser respectivement le codage de correction d'erreur sur les d blocs de données à chacun desquels la séquence CRC respective a été ajoutée ;
**caractérisé en ce que** l'appareil comprend en outre :

un module de regroupement (405) configuré pour regrouper les d blocs de données sur lesquels le codage de correction d'erreur a été réalisé pour obtenir a paquets de données d'informations ayant la même longueur ;
un module de codage de paquet (406) configuré pour réaliser un codage de paquet sur les a paquets de données d'informations pour obtenir b paquets de données de vérification ;
un module de modulation de mappage de constellation (407) configuré pour réaliser une modulation de mappage de constellation sur les a paquets de données d'informations et les b paquets de données de vérification pour obtenir une première séquence de symboles de modulation ayant une longueur de k1 et une seconde séquence de symboles de modulation ayant une longueur de k2, dans lequel la première séquence de symboles de modulation correspond aux a paquets de données d'informations et la seconde séquence de symboles de modulation correspond aux b paquets de données de vérification ;
un module de modulation OFDM (408) configuré pour mapper la première séquence de symboles de modulation sur $M_{ofdm1}$ symboles OFDM continus selon un ordre temporel, et le mappage de la seconde séquence de symboles de modulation sur $M_{ofdm2}$ symboles OFDM continus selon un ordre temporel ; et
un module d'envoi (409) configuré pour envoyer les $M_{ofdm1}$ symboles OFDM et les $M_{ofdm2}$ symboles OFDM, dans lequel le premier symbole OFDM dans les $M_{ofdm1}$ symboles OFDM est envoyé avant le premier symbole OFDM dans les $M_{ofdm2}$ symboles OFDM ;

dans lequel a est un nombre entier supérieur ou égal à 2, d est un nombre entier supérieur ou égal à 2, b est un nombre entier supérieur ou égal à 1, k1 et k2 sont tous deux des nombres entiers supérieurs ou égaux à 1, et $M_{ofdm1}$ et $M_{ofdm2}$ sont tous deux des nombres entiers supérieurs ou égaux à 1.

**10.** Appareil selon la revendication 9, dans lequel, quand le module d'envoi envoie les $M_{ofdm1}$ symboles OFDM et les $M_{ofdm2}$ symboles OFDM, le premier symbole OFDM dans les $M_{ofdm2}$ symboles OFDM est envoyé après ou en même temps que le dernier symbole OFDM dans les $M_{ofdm1}$ symboles OFDM.

**11.** Appareil selon la revendication 10, dans lequel l'appareil comprend en outre :

un premier module de remplissage (402) configuré pour, après que le module d'ajout de séquence CRC ajoute la séquence CRC aux d blocs de données et avant que le module de codage de correction d'erreur réalise le codage de correction d'erreur, la réalisation d'un premier remplissage sur les d blocs de données ajoutés à la séquence CRC, dans lequel le premier remplissage consiste à remplir mli bits dans un $i^{ème}$ bloc de données, et mli est un nombre entier supérieur ou égal à 0, i = 0, 1, ..., d-1,
et,
l'appareil comprend en outre :

un second module de remplissage (404) configuré pour, après que le module de codage de correction d'erreur réalise respectivement le codage de correction d'erreur sur les d blocs de données ajoutés à la séquence CRC et avant que le module de regroupement regroupe les d blocs de données sur lesquels le codage de correction d'erreur est réalisé, réaliser un second remplissage sur les d blocs de données sur lesquels le codage de correction d'erreur est réalisé, dans lequel le second remplissage consiste à ajouter m2 bits à une tête ou à une queue d'un bloc entier de données de code de correction d'erreur, le bloc entier de données de code de correction d'erreur comprend d blocs de code de correction d'erreur ; et m2 est un nombre entier supérieur ou égal à 0,

et,

un nombre de bits de chaque paquet de données d'informations dans les a paquets de données d'informations ayant la même longueur est k x c, dans lequel k est un nombre de bits d'un bloc de code de correction d'erreur, k est un nombre entier supérieur ou égal à 1 et c est un nombre entier supérieur ou égal à 1,

et,

le module de modulation de mappage de constellation est en outre configuré pour, pour les a paquets de données d'informations sur lesquels le codage de paquet est réalisé, tout d'abord le retrait des données de bit du premier remplissage et du second remplissage, puis la réalisation de la modulation de mappage de constellation ; et

pour les b paquets de données de vérification, tout d'abord le retrait de toutes les données de bit obtenues par les données de bit du premier remplissage et du second remplissage sur lequel le codage de paquet est réalisé, puis la réalisation de la modulation de mappage de constellation.

12. Appareil selon la revendication 9, dans lequel une longueur de chaque bloc de données dans les d blocs de données obtenus par la segmentation de bloc de code réalisée par le module de segmentation de bloc de code dépend d'au moins l'un des paramètres suivants : une longueur d'un paquet de données source, un nombre de sous-porteuses sur chaque symbole OFDM alloué par le système et utilisé pour transmettre des données d'un premier nœud de transmission à un second nœud de transmission, un ordre de modulation, un taux de code de correction d'erreur, un nombre de symboles OFDM, un nombre de blocs de code de correction d'erreur dans un paquet de données d'informations, un nombre de blocs de code de correction d'erreur nés sur chaque symbole OFDM, un nombre de bits d'une séquence CRC et un nombre de paquet de données de vérification obtenus par codage de paquet, dans lequel l'ordre de modulation est un nombre de bits portés par un symbole de modulation de mappage de constellation, et,

un ordre de modulation de la première séquence de symboles de modulation est Mod1' et un ordre de modulation de la seconde séquence de symboles de modulation est Mod2', dans lequel Mod1' et Mod2' sont des nombres entiers de 1 à 16 ; ou la première séquence de symboles de modulation comprend q1 sous-séquences de symboles de modulation, les ordres de modulation dans les sous-séquences sont les mêmes, Modi est un ordre de modulation utilisé par une $i^{ème}$ sous-séquence de symboles de modulation dans la première séquence de symboles de modulation, Modi est un nombre entier de 1 à 16, i = 0, 1, ..., (q1-1), la seconde séquence de symboles de modulation comprend q2 sous-séquences de symboles de modulation, les ordres de modulation dans les sous-séquences sont les mêmes, Modj est un ordre de modulation utilisé par une $j^{ème}$ sous-séquence de symboles de modulation dans la seconde séquence de symboles de modulation, Modj est un nombre entier de 1 à 16, et j=0, 1, ..., (q2-1), dans lequel l'ordre de modulation est un nombre de bits portés par un symbole de modulation de mappage de constellation, et q1 et q2 sont tous deux des nombres entiers supérieurs ou égaux à 1.

13. Support de stockage, stockant des instructions qui, lorsqu'elles sont exécutées par un ordinateur, amènent l'ordinateur à exécuter le procédé selon l'une quelconque des revendications 1 à 8.

FIG. 1

FIG. 2

Perform code block segmentation — 300

Add CRC sequence — 301

Perform first-time filling — 302

Perform error correction coding — 303

Perform second-time filling — 304

Perform grouping to obtain a information data packets — 305

Perform packet coding — 306

Perform constellation mapping modulation — 307

Map the first modulation symbol sequence to $M_{ofdm1}$ continuous OFDM symbols according to a time order, and map the second modulation symbol sequence to $M_{ofdm2}$ continuous OFDM symbols according to a time order, herein in sending order numbers, a first OFDM symbol in the $M_{ofdm1}$ OFDM symbols is sent prior to a first OFDM symbol in the $M_{ofdm2}$ OFDM symbols — 308

Send the $M_{ofdm1}$ OFDM symbols and the $M_{ofdm2}$ OFDM symbols to a second transmission node according to sending order numbers — 309

FIG. 3

Code block segmentation module — 400

CRC sequence adding module — 401

First-time filling module — 402

Error correction coding module — 403

Second-time filling module — 404

Grouping module — 405

Packet coding module — 406

Constellation mapping modulation module — 407

OFDM modulation module — 408

Sending module — 409

FIG. 4

Time dimension

| 0 OFDM | 1 OFDM | 2 OFDM | 3 OFDM | 4 OFDM | 5 OFDM | 6 OFDM |

500

501

Frequency dimension

502

● ● ●   Other users

FIG. 5

Time dimension

Time slot 0

| 0 OFDM | 1 OFDM | 2 OFDM | 3 OFDM | 4 OFDM | 5 OFDM | 6 OFDM |

Time slot 1

| 7 OFDM | 8 OFDM | 9 OFDM | 10 OFDM | 11 OFDM | 12 OFDM | 13 OFDM |

600

Frequency dimension

User 0

User 0

601

● ● ●   Other users

● ● ●   Other users

FIG. 6

FIG. 7

FIG. 8

FIG. 9

FIG. 10

FIG. 11

FIG. 12

FIG. 13